# EUROPEAN PATENT SPECIFICATION

(11) **EP 4 275 307 B1**
(45) Date of publication and mention of the grant of the patent: **23.07.2025**
(21) Application number: 21815469.8
(22) Date of filing: 17.11.2021
(51) Int. Cl.: H04L 1/1822, H04L 1/1829, H04L 5/00

(54) **METHODS, COMMUNICATIONS DEVICES, AND INFRASTRUCTURE EQUIPMENT**
VERFAHREN, KOMMUNIKATIONSVORRICHTUNGEN UND INFRASTRUKTURAUSRÜSTUNG
PROCÉDÉS, DISPOSITIFS DE COMMUNICATION ET ÉQUIPEMENT D'INFRASTRUCTURE

(30) Priority: 15.01.2021 EP 21151956
(43) Date of publication of application: 15.11.2023
(73) Proprietor: Sony Group Corporation, Tokyo 108-0075 (JP); Sony Europe B.V., Weybridge, Surrey KT13 0XW (GB)
(72) Inventor: WONG, Shin Horng, Basingstoke, Hampshire RG22 4SB (GB); BEALE, Martin Warwick, Basingstoke, Hampshire RG22 4SB (GB); AWAD, Yassin Aden, Basingstoke, Hampshire RG22 4SB (GB)
(74) Representative: D Young & Co LLP
(86) International application number: PCT/EP2021/082044
(87) International publication number: WO 2022/152433

(56) References cited:
- WO-A1-2020/166728
- US-A1- 2020 274 656
- HUAWEI: "Feature lead summary#3 of HARQ enhancements for NR-U", vol. RAN WG1, no. Reno, USA; 20191118 - 20191122, 25 November 2019 (2019-11-25), XP051830840, Retrieved from the Internet <URL:https://ftp.3gpp.org/tsg_ran/WG1_RL1/TSGR1_99/Docs/R1-1913561.zip> [retrieved on 20191125]
- INTEL CORPORATION: "Discussion on prioritized UE HARQ feedback enhancements for URLLC/IIoT", vol. RAN WG1, no. e-Meeting; 20201026 - 20201113, 24 October 2020 (2020-10-24), XP051946768, Retrieved from the Internet <URL:https://ftp.3gpp.org/tsg_ran/WG1_RL1/TSGR1_103-e/Docs/R1-2008984.zip> [retrieved on 20201024]

## Description

### BACKGROUND

### Field of Disclosure

The present disclosure relates to communications devices, infrastructure equipment and methods for the transmission of data by a communications device in a wireless communications network.

### Description of Related Art

The "background" description provided herein is for the purpose of generally presenting the context of the disclosure.

Latest generation mobile telecommunication systems, such as those based on the 3GPP defined UMTS and Long Term Evolution (LTE) architecture, are able to support a wider range of services than simple voice and messaging services offered by previous generations of mobile telecommunication systems. For example, with the improved radio interface and enhanced data rates provided by LTE systems, a user is able to enjoy high data rate applications such as mobile video streaming and mobile video conferencing that would previously only have been available via a fixed line data connection. The demand to deploy such networks is therefore strong and the coverage area of these networks, i.e. geographic locations where access to the networks is possible, is expected to continue to increase rapidly.

Future wireless communications networks will be expected routinely and efficiently to support communications with an ever-increasing range of devices associated with a wider range of data traffic profiles and types than existing systems are optimised to support. For example, it is expected future wireless communications networks will be expected to efficiently support communications with devices including reduced complexity devices, machine type communication (MTC) devices, high resolution video displays, virtual reality headsets and so on. Some of these different types of devices may be deployed in very large numbers, for example low complexity devices for supporting the "The Internet of Things", and may typically be associated with the transmissions of relatively small amounts of data with relatively high latency tolerance. Other types of device, for example supporting high-definition video streaming, may be associated with transmissions of relatively large amounts of data with relatively low latency tolerance. Other types of device, for example used for autonomous vehicle communications and for other critical applications, may be characterised by data that should be transmitted through the network with low latency and high reliability. A single device type might also be associated with different traffic profiles / characteristics depending on the application(s) it is running. For example, different consideration may apply for efficiently supporting data exchange with a smartphone when it is running a video streaming application (high downlink data) as compared to when it is running an Internet browsing application (sporadic uplink and downlink data) or being used for voice communications by an emergency responder in an emergency scenario (data subject to stringent reliability and latency requirements).

In view of this there is expected to be a desire for future wireless communications networks, for example those which may be referred to as 5G or new radio (NR) systems / new radio access technology (RAT) systems, as well as future iterations / releases of existing systems, to efficiently support connectivity for a wide range of devices associated with different applications and different characteristic data traffic profiles and requirements.

One example of a new service is referred to as Ultra Reliable Low Latency Communications (URLLC) services, which, as its name suggests, requires that a data unit or packet be communicated with a high reliability and with a low communications delay. Another example of a new service is Enhanced Mobile Broadband (eMBB) services, which are characterised by a high capacity with a requirement to support up to 20 Gb/s. URLLC and eMBB type services therefore represent challenging examples for both LTE type communications systems and 5G/NR communications systems. To facilitate transmission of data, Automatic Repeat Request (ARQ) type techniques and Hybrid ARQ type techniques can utilise a feedback signal (ACK/NACK) which is used to provide feedback to a transmitter of data transmissions indicating whether a data unit was successfully received by a receiver so that data units which were not received successfully can be re-transmitted. HARQ techniques can be used to support various serves such as eMBB and URLLC, although the requirement for high integrity makes them particularly but not exclusively applicable to URLLC. An efficient application of HARQ type techniques to support various services efficiently in wireless communications systems can therefore represent a technical challenge.

US 2020/274656 A1 (GORDAYCHIK BRIAN [US]) 27 August 2020 discusses an apparatus for multiple link data unit transmission / reception.

HUAWEI: "Feature lead summary#3 of HARO enhancements for NR-U", 3GPP DRAFT; R1-1913561, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Reno, USA; 20191118 - 20191122 25 November 2019, XP051830840, discusses proposals on HARQ enhancement for NR-U.

WO 2020/166728 A1 (SHARP KK [JP]; FG INNOVATION CO LTD [CN]) 20 August 2020 discusses adjusting a contention window using a HARQ-ACK.

### SUMMARY OF THE DISCLOSURE

The present disclosure can help address or mitigate at least some of the issues discussed above.

The invention is defined by the independent claims. Further embodiments of the invention are defined by the dependent claims. Although the invention is only defined by the claims, the below embodiments, examples and aspects are present for aiding in understanding the background and advantages of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings wherein like reference numerals designate identical or corresponding parts throughout the several views, and wherein:
Figure 1 schematically represents some aspects of an LTE-type wireless telecommunication system which may be configured to operate in accordance with certain embodiments of the present disclosure;
Figure 2 schematically represents some aspects of a new radio access technology (RAT) wireless telecommunications system which may be configured to operate in accordance with certain embodiments of the present disclosure;
Figure 3 is a schematic block diagram of an example infrastructure equipment and communications device which may be configured to operate in accordance with certain embodiments of the present disclosure;
Figure 4 is a graphical representation of signals transmitted via a wireless access interface in time and frequency illustrating how multiple Hybrid Automatic Repeat Request Acknowledgement (HARQ-ACK) feedback indications may be multiplexed onto a single Physical Uplink Control Channel (PUCCH);
Figure 5 is a graphical representation of signals transmitted via a wireless access interface in time and frequency illustrating how a PUCCH Resource Indicator may be used to indicate onto which PUCCH HARQ-ACK feedback indications may be multiplexed;
Figure 6 is a graphical representation of signals transmitted via a wireless access interface in time and frequency corresponding to the examples shown in Figures 4 and 5 illustrating an example of sub-slot based PUCCHs;
Figure 7 is a graphical representation of signals transmitted via a wireless access interface in time and frequency corresponding to the examples shown in Figures 4 and 5 illustrating how multiple HARQ-ACK feedback indications for Semi-Persistent Scheduling (SPS) Physical Downlink Shared Channels (PDSCHs) may be multiplexed onto a single PUCCH per sub-slot;
Figure 8 is a graphical representation of signals transmitted via a wireless access interface in time and frequency illustrating how packet jitter of data from a source can mean that downlink data transmitted via two groups of SPS resources can cause some to be unused;
Figure 9 is a graphical representation of signals transmitted via a wireless access interface illustrating an example of how SPS can be over-configured to compensate for jittering traffic;
Figure 10 is a graphical representation of signals transmitted via a wireless access interface illustrating an example of how gaps may be implemented between SPS instances within a jitter time window;
Figure 11 is a graphical representation of signals transmitted via a wireless access interface illustrating an example of how the use of multiple SPS instances within a jitter time window may result in excessive HARQ-ACK feedback indications;
Figure 12 is a diagram which in part shows a graphical plot of signals with respect to time and a logical combination of ACK/NACK indications as a first example of HARQ-ACK bundling for multiple SPS instances using a logical "OR" operator;
Figure 13 is a diagram which in part shows a graphical plot of signals with respect to time and a logical combination of ACK/NACK indications as a second example of HARQ-ACK bundling for multiple SPS instances using a logical "OR" operator in which PDSCHs are transmitted in two of the SPS instances;
Figure 14 is a diagram, which in part shows a graphical plot of signals with respect to time and a logical combination of ACK/NACK indications, illustrating an operation performed by a communications device (UE) according to an example embodiment;
Figure 15 is a diagram which in part shows a graphical plot of signals with respect to time and a logical combination of ACK/NACK indications illustrating an operation performed by a communications device (UE) according to an example embodiment in which one subset of downlink resources instances in which data units are transmitted are combined with an AND operation;
Figure 16 is a diagram, which in part shows a graphical plot of signals with respect to time and a logical combination of ACK/NACK indications, illustrating an operation performed by a communications device (UE) according to an example embodiment in which SPS subsets are repetitions of each other;
Figure 17 is a graphical representation of signals transmitted via a wireless access interface in time and frequency illustrating an example embodiment in which an SPS Group of downlink data resource instances is implicitly indicated to a UE by K₁ values signalled when the SPS Group was activated;
Figure 18 is a diagram, which in part shows a graphical plot of signals with respect to time and a logical combination of ACK/NACK indications, illustrating an operation performed by a communications device (UE) according to an example embodiment in which a downlink control information (DCI) is used to update changes to SPS subsets of an SPS Group;
Figure 19 is a diagram, which in part shows a graphical plot of signals with respect to time and a logical combination of ACK/NACK indications, illustrating an operation performed by a communications device (UE) according to an example embodiment in which a MAC-CE is used to indicate SPS subsets which are used by a UE to form a bundled ACK/NACK indication;
Figure 20 is a diagram, which in part shows a graphical plot of signals with respect to time and a logical combination of ACK/NACK indications, illustrating an operation performed by a communications device (UE) according to an example embodiment in which an activation DCI changes a bundling operation for an SPS subset;
Figure 21 shows a part schematic, part message flow diagram representation of a wireless communications network comprising a communications device and an infrastructure equipment in accordance with embodiments of the present technique; and
Figure 22 shows a flow diagram illustrating a process of communications in a communications system in accordance with embodiments of the present technique.

### DETAILED DESCRIPTION OF THE EMBODIMENTS

### Long Term Evolution Advanced Radio Access Technology (4G)

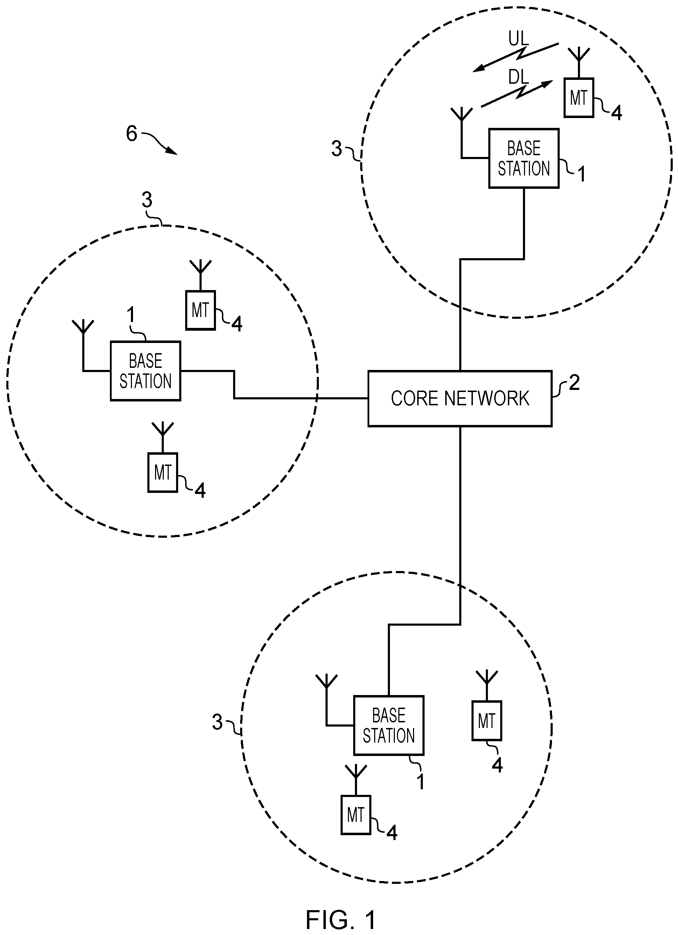

Figure 1 provides a schematic diagram illustrating some basic functionality of a mobile telecommunications network / system 6 operating generally in accordance with LTE principles, but which may also support other radio access technologies, and which may be adapted to implement embodiments of the disclosure as described herein. Various elements of Figure 1 and certain aspects of their respective modes of operation are well-known and defined in the relevant standards administered by the 3GPP (RTM) body, and also described in many books on the subject, for example, Holma H. and Toskala A [1]. It will be appreciated that operational aspects of the telecommunications networks discussed herein which are not specifically described (for example in relation to specific communication protocols and physical channels for communicating between different elements) may be implemented in accordance with any known techniques, for example according to the relevant standards and known proposed modifications and additions to the relevant standards.

The network 6 includes a plurality of base stations 1 connected to a core network 2. Each base station provides a coverage area 3 (i.e. a cell) within which data can be communicated to and from communications devices 4. Although each base station 1 is shown in Figure 1 as a single entity, the skilled person will appreciate that some of the functions of the base station may be carried out by disparate, inter-connected elements, such as antennas (or antennae), remote radio heads, amplifiers, etc. Collectively, one or more base stations may form a radio access network.

Data is transmitted from base stations 1 to communications devices 4 within their respective coverage areas 3 via a radio downlink. Data is transmitted from communications devices 4 to the base stations 1 via a radio uplink. The core network 2 routes data to and from the communications devices 4 via the respective base stations 1 and provides functions such as authentication, mobility management, charging and so on. Terminal devices may also be referred to as mobile stations, user equipment (UE), user terminal, mobile radio, communications device, and so forth. Services provided by the core network 2 may include connectivity to the internet or to external telephony services. The core network 2 may further track the location of the communications devices 4 so that it can efficiently contact (i.e. page) the communications devices 4 for transmitting downlink data towards the communications devices 4.

Base stations, which are an example of network infrastructure equipment, may also be referred to as transceiver stations, nodeBs, e-nodeBs, eNB, g-nodeBs, gNB and so forth. In this regard different terminology is often associated with different generations of wireless telecommunications systems for elements providing broadly comparable functionality. However, certain embodiments of the disclosure may be equally implemented in different generations of wireless telecommunications systems, and for simplicity certain terminology may be used regardless of the underlying network architecture. That is to say, the use of a specific term in relation to certain example implementations is not intended to indicate these implementations are limited to a certain generation of network that may be most associated with that particular terminology.

### New Radio Access Technology (5G)

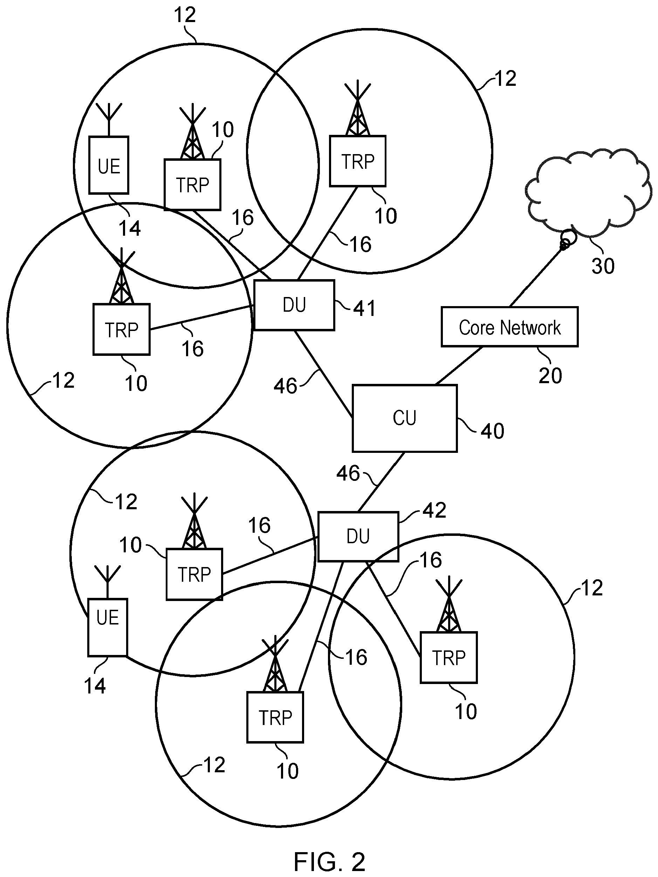

An example configuration of a wireless communications network which uses some of the terminology proposed for and used in NR and 5G is shown in Figure 2. In Figure 2 a plurality of transmission and reception points (TRPs) 10 are connected to distributed control units (DUs) 41, 42 by a connection interface represented as a line 16. Each of the TRPs 10 is arranged to transmit and receive signals via a wireless access interface within a radio frequency bandwidth available to the wireless communications network. Thus, within a range for performing radio communications via the wireless access interface, each of the TRPs 10, forms a cell of the wireless communications network as represented by a circle 12. As such, wireless communications devices 14 which are within a radio communications range provided by the cells 12 can transmit and receive signals to and from the TRPs 10 via the wireless access interface. Each of the distributed units 41, 42 are connected to a central unit (CU) 40 (which may be referred to as a controlling node) via an interface 46. The central unit 40 is then connected to the core network 20 which may contain all other functions required to transmit data for communicating to and from the wireless communications devices and the core network 20 may be connected to other networks 30.

The elements of the wireless access network shown in Figure 2 may operate in a similar way to corresponding elements of an LTE network as described with regard to the example of Figure 1. It will be appreciated that operational aspects of the telecommunications network represented in Figure 2, and of other networks discussed herein in accordance with embodiments of the disclosure, which are not specifically described, for example in relation to specific communication protocols and physical channels for communicating between different elements, may be implemented in accordance with any known techniques. For example, operational aspects may be implemented according to currently used approaches for wireless telecommunications systems such as those defined in accordance with the relevant standards.

The TRPs 10 of Figure 2 may in part have a corresponding functionality to a base station or eNodeB of an LTE network. Similarly, the communications devices 14 may have a functionality corresponding to the UE devices 4 known for operation with an LTE network. It will be appreciated therefore that operational aspects of a new RAT network (for example in relation to specific communication protocols and physical channels for communicating between different elements) may be different to those known from LTE or other known mobile telecommunications standards. However, it will also be appreciated that each of the core network component, base stations and communications devices of a new RAT network will be functionally similar to, respectively, the core network component, base stations and communications devices of an LTE wireless communications network.

In terms of broad top-level functionality, the core network 20 connected to the new RAT telecommunications system represented in Figure 2 may be broadly considered to correspond with the core network 2 represented in Figure 1, and the respective central units 40 and their associated distributed units / TRPs 10 may be broadly considered to provide functionality corresponding to the base stations 1 of Figure 1. The term network infrastructure equipment / access node may be used to encompass these elements and more conventional base station type elements of wireless telecommunications systems. Depending on the application at hand the responsibility for scheduling transmissions which are scheduled on the radio interface between the respective distributed units and the communications devices may lie with the controlling node / central unit and / or the distributed units / TRPs. A communications device 14 is represented in Figure 2 within the coverage area of the first communication cell 12. This communications device 14 may thus exchange signalling with the first central unit 40 in the first communication cell 12 via one of the distributed units / TRPs 10 associated with the first communication cell 12.

It will further be appreciated that Figure 2 represents merely one example of a proposed architecture for a new RAT based telecommunications system in which approaches in accordance with the principles described herein may be adopted, and the functionality disclosed herein may also be applied in respect of wireless telecommunications systems having different architectures.

Thus, certain embodiments of the disclosure as discussed herein may be implemented in wireless telecommunication systems / networks according to various different architectures, such as the example architectures shown in Figures 1 and 2. It will thus be appreciated that the specific wireless telecommunications architecture in any given implementation is not of primary significance to the principles described herein. In this regard, certain embodiments of the disclosure may be described generally in the context of communications between network infrastructure equipment / access nodes and a communications device, wherein the specific nature of the network infrastructure equipment / access node and the communications device will depend on the network infrastructure for the implementation at hand. For example, in some scenarios the network infrastructure equipment / access node may comprise a base station, such as an LTE-type base station 1 as shown in Figure 1 which is adapted to provide functionality in accordance with the principles described herein, and in other examples the network infrastructure equipment may comprise a control unit / controlling node 40 and / or a TRP 10 of the kind shown in Figure 2 which is adapted to provide functionality in accordance with the principles described herein.

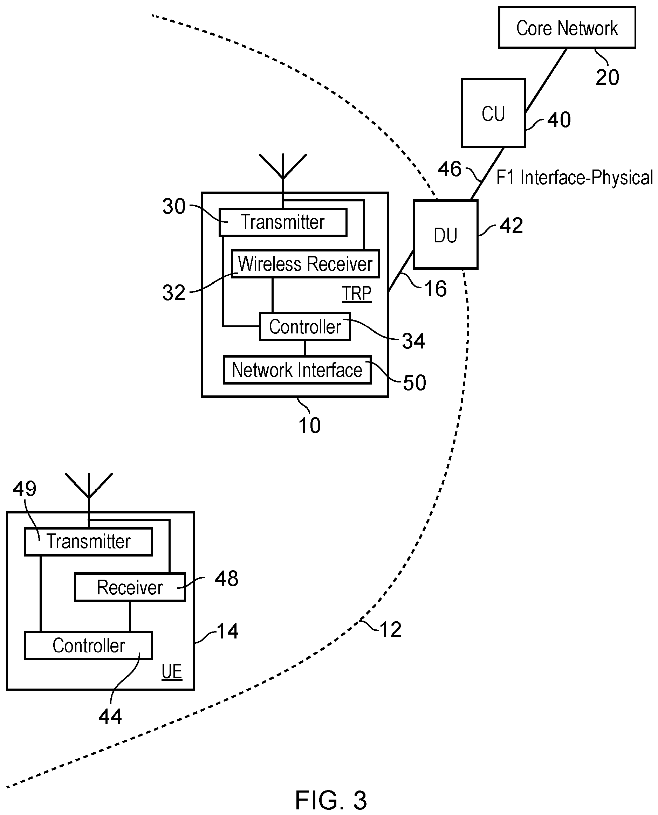

A more detailed diagram of some of the components of the network shown in Figure 2 is provided by Figure 3. In Figure 3, a TRP 10 as shown in Figure 2 comprises, as a simplified representation, a wireless transmitter 30, a wireless receiver 32 and a controller or controlling processor 34 which may operate to control the transmitter 30 and the wireless receiver 32 to transmit and to receive radio signals to one or more UEs 14 within a cell 12 formed by the TRP 10. As shown in Figure 3, an example UE 14 is shown to include a corresponding transmitter 49, a receiver 48 and a controller 44 which is configured to control the transmitter 49 and the receiver 48 to transmit signals representing uplink data to the wireless communications network via the wireless access interface formed by the TRP 10 and to receive downlink data as signals transmitted by the transmitter 30 and received by the receiver 48 in accordance with the conventional operation.

The transmitters 30, 49 and the receivers 32, 48 (as well as other transmitters, receivers and transceivers described in relation to examples and embodiments of the present disclosure) may include radio frequency filters and amplifiers as well as signal processing components and devices in order to transmit and receive radio signals in accordance for example with the 5G/NR standard. The controllers 34, 44, as well as other controllers described in relation to examples and embodiments of the present disclosure, may be, for example, a microprocessor, a CPU, or a dedicated chipset, etc., configured to carry out instructions, which are stored on a computer readable medium, such as a non-volatile memory. The processing steps described herein may be carried out by, for example, a microprocessor in conjunction with a random access memory, operating according to instructions stored on a computer readable medium. The transmitters 30, 49, the receivers 32, 48 and the controllers 34, 44 are schematically shown in Figure 3 as separate elements for ease of representation. However, it will be appreciated that the functionality of these elements can be provided in various different ways, for example using one or more suitably programmed programmable computer(s), or one or more suitably configured application-specific integrated circuit(s) / circuitry / chip(s) / chipset(s). As will be appreciated the infrastructure equipment / TRP / base station as well as the UE / communications device will in general comprise various other elements associated with its operating functionality.

As shown in Figure 3, the TRP 10 also includes a network interface 50 which connects to the DU 42 via a physical interface 16. The network interface 50 therefore provides a communication link for data and signalling traffic from the TRP 10 via the DU 42 and the CU 40 to the core network 20.

The interface 46 between the DU 42 and the CU 40 is known as the F1 interface which can be a physical or a logical interface. The F1 interface 46 between CU and DU may operate in accordance with specifications 3GPP TS 38.470 and 3GPP TS 38.473, and may be formed from a fibre optic or other wired or wireless high bandwidth connection. In one example the connection 16 from the TRP 10 to the DU 42 is via fibre optic. The connection between a TRP 10 and the core network 20 can be generally referred to as a backhaul, which comprises the interface 16 from the network interface 50 of the TRP10 to the DU 42 and the F1 interface 46 from the DU 42 to the CU 40.

### eURLLC and eMBB

Systems incorporating New Radio (NR) technology are expected to support different services (or types of services), which may be characterised by different requirements for latency, data rate and/or reliability. For example, Enhanced Mobile Broadband (eMBB) services are characterised by high capacity with a requirement to support up to 20 Gb/s. The requirements for Ultra Reliable and Low Latency Communications (URLLC) services are for one transmission of a 32 byte packet to be transmitted from the radio protocol layer 2/3 SDU ingress point to the radio protocol layer 2/3 SDU egress point of the radio interface within 1 ms with a reliability of 1 - 10⁻⁵ (99.999 %) or higher (99.9999%) [2].

Massive Machine Type Communications (mMTC) is another example of a service which may be supported by NR-based communications networks. In addition, systems may be expected to support further enhancements related to Industrial Internet of Things (IIoT) in order to support services with new requirements of high availability, high reliability, low latency, and in some cases, high-accuracy positioning.

Enhanced URLLC (eURLLC) [3] specifies features that require high reliability and low latency, such as factory automation, transport industry, electrical power distribution, etc. in a 5G system. eURLLC is further enhanced as IIoT-URLLC [4], for which one of the objectives is to enhance UE feedback for Hybrid Automatic Repeat Request Acknowledgements (HARQ-ACK) for Physical Downlink Shared Channel (PDSCH) transmissions. As will be appreciated from the example embodiments, reference to HARQ-type processes should be understood to indicate any communication process require the transmission of an acknowledgement in response to a transmission of a data unit.

### PDSCH HARQ-ACK Feedback

In a Dynamic Grant PDSCH (DG-PDSCH), the PDSCH resource is dynamically indicated by a gNB to a UE using a DL Grant carried by Downlink Control Information (DCI) in a Physical Downlink Control Channel (PDCCH). That is to say that where communication resources are allocated by means of a DG-PDSCH, DCI is transmitted to the UE to indicate the allocated communication resources and parameters for determining the uplink resources for transmitting acknowledgement indication (ACK/NACK) indicating whether the data transmitted using the allocated resources had been correctly received or not. The uplink resources for transmitting acknowledgement information may be allocated on a Physical Uplink Control Channel (PUCCH). The same PUCCH resources may be used for the transmission of acknowledgement information associated with multiple downlink transmissions.

A PDSCH (downlink data unit) may be transmitted using a HARQ transmission process, where for a PDSCH ending in slot *n,* the corresponding PUCCH carrying the HARQ-ACK is transmitted in slot *n*+*K*₁. Here, in Dynamic Grant PDSCH, the value of *K*₁ is indicated in the field *"PDSCH-to-HARQ_feedback timing indicator"* of the DL Grant (carried by DCI Format 1_0, DCI Format 1_1 or DCI Format 1_2). Multiple (different) PDSCHs can point to the same slot for transmission of their respective HARQ-ACKs, and these HARQ-ACKs (in the same slot) are multiplexed into a single PUCCH. Hence, a PUCCH can contain multiple HARQ-ACKs for multiple PDSCHs.

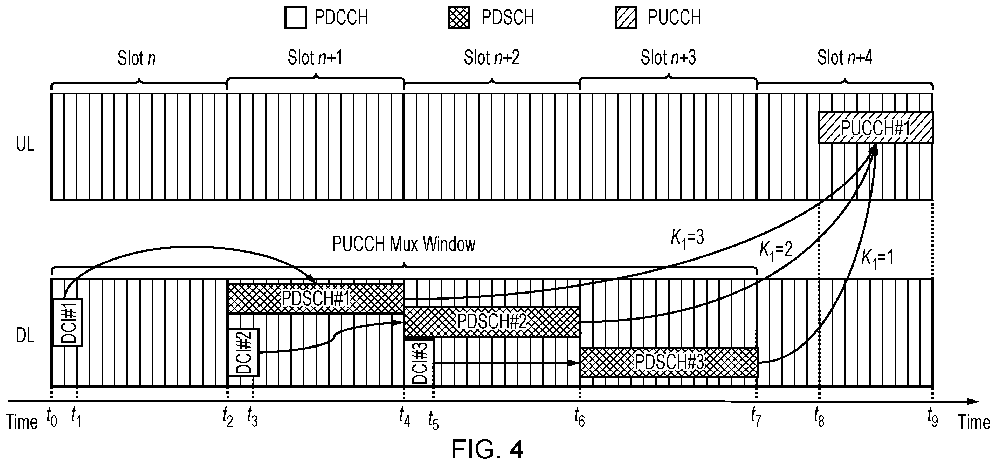

An example of this is shown in Figure 4, which provides a graphical representation of time against frequency where time progresses from left to right. As illustrated in Figure 4 three DL Grants are transmitted to the UE via DCI#1, DCI#2 and DCI#3 in slot *n, n*+1 and *n*+2 respectively. DCI#1, DCI#2 and DCI#3 schedule PDSCH#1, PDSCH#2 and PDSCH#3 respectively. DCI#1, DCI#2 and DCI#3 further indicate *K*₁=3, *K*₁=2 and *K*₁=1 respectively. Since the *K₁* values indicate that the HARQ-ACK feedback for PDSCH#1, PDSCH#2 and PDSCH#3 are all to be transmitted in slot *n*+4, the UE multiplexes all of these HARQ-ACKs into a single PUCCH, i.e. PUCCH#1. The PUCCH Multiplexing Window is a time window where PDSCHs can be multiplexed into that single PUCCH, and the size of the PUCCH multiplexing window depends on the range of *K₁* values. In the example in Figure 4, the PUCCH Multiplexing Window is from Slot *n* to Slot *n*+3 (i.e. between time *t₀* and time *t₇*), which means the max *K₁* value is 4 slots.

In earlier versions of the 3GPP standard such as Rel-15, only one PUCCH per slot is allowed to carry HARQ-ACKs for the same UE, even if the different PUCCHs do not overlap in time. The PUCCH resource is indicated in the *"PUCCH Resource Indicator"* (PRI) field in the DL Grant. Each DL Grant may indicate a different PUCCH resource, but the UE will follow the PRI indicated in the last PDSCH in the PUCCH Multiplexing Window since the UE only knows the total number of HARQ-ACK bits after the last PDSCH is received.

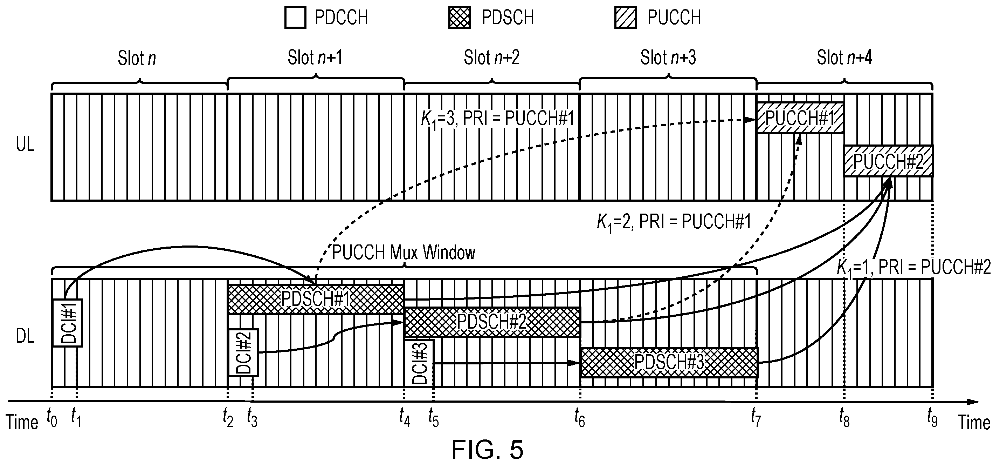

An example of this is shown in Figure 5, where DCI#1 and DCI#2 indicate PUCCH#1 for the HARQ-ACKs corresponding to PDSCH#1 and PDSCH#2, but DCI#3 indicates PUCCH#2 for the HARQ-ACK corresponding to PDSCH#3. Here, PUCCH#1 and PUCCH#2 do not overlap in time. Since DCI#3 schedules the last PDSCH, i.e. PDSCH#3, in the Multiplexing Window, the UE will use PUCCH#2 to carry the HARQ-ACKs for PDSCH#1, PDSCH#2 and PDSCH#3. It should be noted here that a PUCCH carrying other UCI such as SR (Scheduling Request) can be transmitted separately with a PUCCH carrying HARQ-ACKs within the same slot if they do not overlap in time.

In Rel-16 eURLLC, sub-slot PUCCH is introduced for carrying HARQ-ACKs for URLLC PDSCHs. Sub-slot based PUCCHs allows more than one PUCCH carrying HARQ-ACKs to be transmitted within a slot. This gives more opportunity for PUCCHs carrying HARQ-ACKs for PDSCHs to be transmitted within a slot, thereby reducing latency for HARQ-ACK feedback. In a sub-slot based PUCCH, the granularity of the *K₁* parameter (i.e. the time difference between the end of a PDSCH and the start of its corresponding PUCCH) is in units of sub-slots instead of units of slots, where the sub-slot size can be either two symbols or seven symbols.

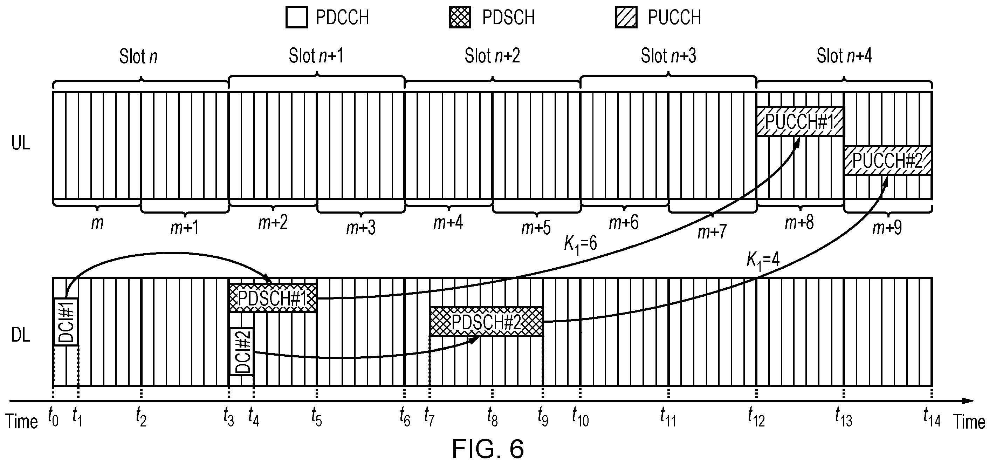

An example of this is shown in Figure 6, where the sub-slot size equals seven symbols (i.e. half a slot) and the sub-slots are labelled as *m, m*+1, *m*+2, etc. PDSCH#1 is transmitted in slot *n*+1 but for sub-slot based HARQ-ACK PUCCH, it is considered to be transmitted in sub-slot *m*+2 and here *K₁*=6 which means that the corresponding HARQ-ACK is in sub-slot *m*+2+*K₁ = m*+8. PDSCH#2 is transmitted in slot *n*+2 but occupies sub-slots *m*+4 and *m*+5. The reference for *K₁* is relative to the sub-slot where the PDSCH ends, and in this case PDSCH#2 ends in sub-slot *m*+5. The DL Grant in DCI#2 that schedules PDSCH#2 indicates *K₁*=4*,* which schedules a PUCCH for its HARQ-ACK at sub-slot *m*+5+*K₁* = sub-slot *m+9.*

### Semi-Persistent Scheduling (SPS)

As is well understood by those skilled in the art, a gNB uses a PDSCH for downlink data transmission to a UE. The PDSCH resources used for the transmission of the PDSCH can be scheduled by a gNB either dynamically, or through the allocation of Semi-Persistent Scheduling (SPS) resources.

Similarly to the use of Configured Grants (CGs) in the uplink, the use of SPS in the downlink reduces latency, particularly for regular and periodic traffic. The gNB is required to explicitly activate and deactivate SPS resources when it determines they may be required. These SPS resources are typically configured via Radio Resource Control (RRC) signalling, and occur periodically where each SPS PDSCH occasion has a pre-configured and fixed duration. This allows the gNB to schedule traffic that has a known periodicity and packet size. The gNB may or may not transmit any PDSCH in any given SPS PDSCH occasion, and so the UE is required to monitor each SPS PDSCH occasion for a potential PDSCH transmission.

In Rel-15 the UE can only be configured with one SPS PDSCH and this SPS PDSCH is activated using an activation DCI (Format 1_0 or 1_1) with the Cyclic Redundancy Code (CRC) scrambled with a Configured Scheduling Radio Network Temporary Identifier (CS-RNTI). Once an SPS PDSCH is activated, the UE will monitor for a potential PDSCH in each SPS PDSCH occasion of the SPS PDSCH configuration without the need for any DL Grant until the SPS PDSCH is deactivated. Deactivation of the SPS PDSCH is indicated via a deactivation DCI scrambled with CS-RNTI. The UE provides a HARQ-ACK feedback for the deactivation DCI, but no HARQ-ACK feedback is provided for an activation DCI.

Similar to DG-PDSCH, the slot containing the PUCCH resource for HARQ-ACK corresponding to SPS PDSCH is indicated using the *K*₁ value in the field *"PDSCH-to-HARQ_feedback timing indicator"* of the activation DCI. Since a dynamic grant is not used for SPS PDSCH, this *K*₁ value is applied for every SPS PDSCH occasion, and can only be updated after it has been deactivated and re-activated using another activation DCI with a different *K*₁ value.

Since there is only one SPS PDSCH, PUCCH Format 0 or 1 is used to carry the HARQ-ACK feedback. If the PUCCH collides with a PUCCH carrying HARQ-ACK feedback for a DG-PDSCH, the HARQ-ACK for SPS PDSCH is multiplexed into the PUCCH corresponding to the DG-PDSCH.

In Rel-16 the UE can be configured with up to eight SPS PDSCHs, where each SPS PDSCH has an SPS Configuration Index that is RRC configured. Each SPS PDSCH is *individually* activated using a DCI (Format 1_0, 1_1 & 1_2) with the CRC scrambled with CS-RNTI, where the DCI indicates the SPS Configuration Index of the SPS PDSCH to be activated. However, multiple SPS PDSCHs can be deactivated using a single deactivation DCI. Similar to Rel-15, the UE provides a HARQ-ACK feedback for the deactivation DCI, but does not provide one for the activation DCI.

The slot or sub-slot containing the PUCCH resource for HARQ-ACK feedback corresponding to an SPS PDSCH occasion is determined using the *K*₁ value indicated in the activation DCI. Since each SPS PDSCH configuration is individually activated, different SPS PDSCH can be indicated with different *K*₁ values.

Since different *K₁* values can be used for different SPS PDSCH configurations, it is possible that the HARQ-ACK for multiple SPS PDSCHs point to the same slot or sub-slot, and in such a scenario, these HARQ-ACKs are multiplexed into a single PUCCH. For multiple SPS PDSCH configurations, PUCCH Format 2, 3 & 4 (in addition to PUCCH Format 0 & 1) can be used to carry multiple HARQ-ACKs for SPS PDSCH. Here, the HARQ-ACKs in the PUCCH are sorted in ascending order according to the DL slot for each of the SPS PDSCH Configuration Indices, and then sorted in ascending order of SPS PDSCH Configuration Index. It should be noted here that since typically the *K₁* value is fixed per SPS PDSCH then it is unlikely to have two or more SPS PDSCH with the same index being multiplexed into a PUCCH.

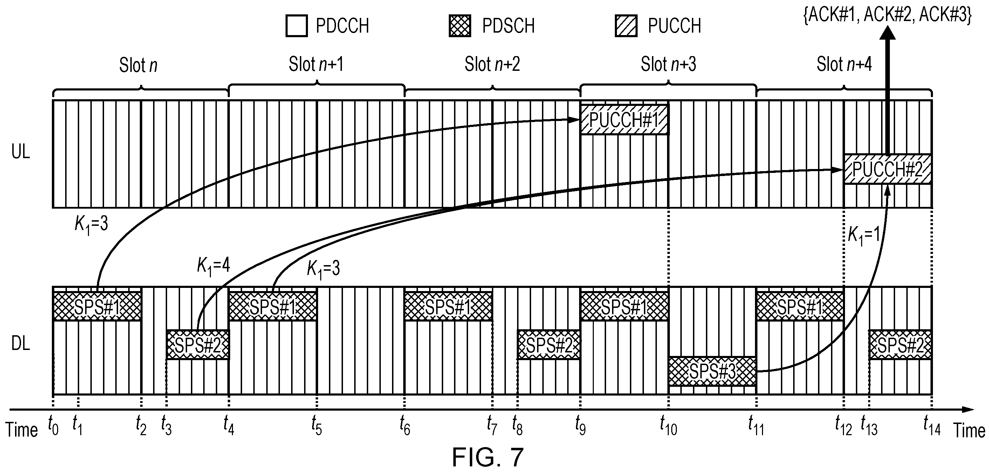

An example of this is shown in Figure 7, where a UE is configured with three SPS PDSCHs labelled as SPS#1, SPS#2 and SPS#3 with different periodicities that are RRC configured with SPS Configuration Index 1, 2 and 3 respectively. SPS#1, SPS#2 and SPS#3 are activated with *K*₁=3*, K*₁=4 and *K*₁=1 respectively. These *K*₁ values result in the PUCCH for HARQ-ACK feedback corresponding to SPS#2 in Slot *n*, SPS#1 in Slot *n*+1 and SPS#3 in Slot *n*+3 being in the same slot, i.e. carried by PUCCH#2 in Slot *n*+4. PUCCH#2 therefore provides 3 HARQ-ACKs labelled as {ACK#1, ACK#2, ACK#3} for SPS#1, SPS#2 and SPS#3 respectively according to their SPS PDSCH Configuration Indices (it can be seen that, in this example, there is only one unique SPS PDSCH per DL slot that has HARQ-ACK multiplexed into PUCCH#2).

In Rel-16 of 3GPP, when the PUCCH for an SPS PDSCH collides with the PUCCH for a DG-PDSCH, their HARQ-ACKs are multiplexed, where the SPS PDSCH HARQ-ACKs are appended after those for DG-PDSCH, if they have the same priority. Otherwise, one of the PUCCHs is prioritised.

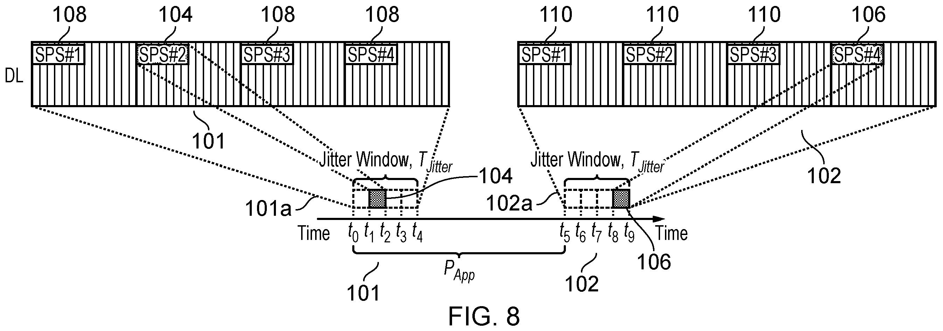

For some types of application traffic, while the scheduled packet arrival may be periodic, the actual arrival time of the packet may experience jitter causing it to arrive randomly within a jitter time window, *T_{Jitter}.* An example is shown in Figure 8, where an application has periodic traffic with a periodicity of *P_{App}.* However, this traffic experiences jitter and so the actual packet arrival falls within a time window *T_{Jitter}.* In this example, the first jitter time window starts at time *t*₀ where the packet can arrive within this time window between *t*₀ to *t*₄ and here the packet arrives at time *t*₁. The next packet arrives after at least a time *P_{App}* later, starting at time *t*₅, and here once again the packet can arrive at any time within the jitter time window between *t*₅ to *t₉.* In the second instance, the packet arrives at time *t*₈, which is towards the end of the jitter time window *T_{Jitter}.*

SPS configuration provides PDSCH resources to the UE with a deterministic periodicity, which can be from 1 to 640 slots. It is recognised that such deterministic periodicity configuration is not suitable for traffic experiencing jitter. In order to cater for jitter, multiple SPS configurations are used, where each SPS configuration has a different time offset, i.e. the SPS resource is over-configured. An example illustration is shown in Figure 8, which provides a diagrammatic representation of time and frequency of signals transmitted and received by a UE.

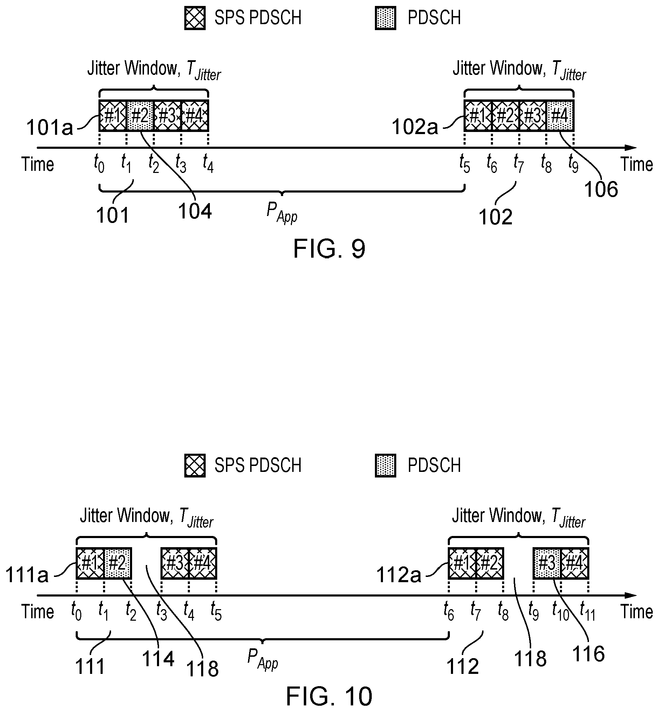

In Figure 8 two repeating groups 101, 102 of four SPS downlink resource instances SPS#1, SPS#2, SPS#3, SPS#4 are shown in a view corresponding to those shown in Figures 4 to 7 with a reduced simplified representation 101a, 102a, which corresponds with the representation of signals represented in Figures 9 to 20 below. The SPS downlink resource instances SPS#1, SPS#2, SPS#3, SPS#4 have a periodicity of *P_{App}.* As shown in Figure 8, a UE, which has been configured with four SPS PDSCH configurations,101, 102, may not receive downlink data units on all of the downlink resource instances SPS#1, SPS#2, SPS#3, SPS#4. The four SPS downlink resource instances SPS#1, SPS#2, SPS#3, SPS#4 may fall within a jitter time window. Although each of the groups of repeating downlink resource instances SPS#1, SPS#2, SPS#3, SPS#4 are available for a gNB to transmit data to the UE, with a periodicity *P_{App},* jitter in a packet arrival time at the UE for a service can result in some of the downlink resource instances SPS#1, SPS#2, SPS#3, SPS#4 being unused 108, 110 by the gNB, because it does not have data to transmit in all of these SPS instances. As shown in Figure 8, only the downlink resource instance 104 of the first group 101, 101a as represented by a dark shading, and only the downlink resource instance 106 of the second group 102, 102a as represented by a dark shading includes a transmitted downlink data unit. The illustration shown in Figure 8 is presented in a more simplified representation in Figure 9, where the four SPS configurations SPS#1, SPS#2, SPS#3, SPS#4with periodicity *P_{App},* with different offsets, are configured in order to cater for a packet jitter window. Hence, by configuring multiple SPS resources, the UE is therefore provided with PDSCH resource whenever the packet data arrives within the jitter time window.

It should be appreciated that the SPS resources configured within a jitter time window do not need to be adjacent to each other and there can be gaps between two SPS instances. An example is in Figure 10, where four SPS instances, SPS#1, SPS#2, SPS#3 and SPS#4, with a periodicity between two groups 111, 112 are configured to handle jitter in which only SPS instances 114, 116 are used and here there is a gap between SPS#2 and SPS#3 118. It should also be appreciated that over-configuration of SPS resources is not limited to only traffic types with jitter but can also be used for traffic types that do not have a periodicity that matches those that are configurable by RRC.

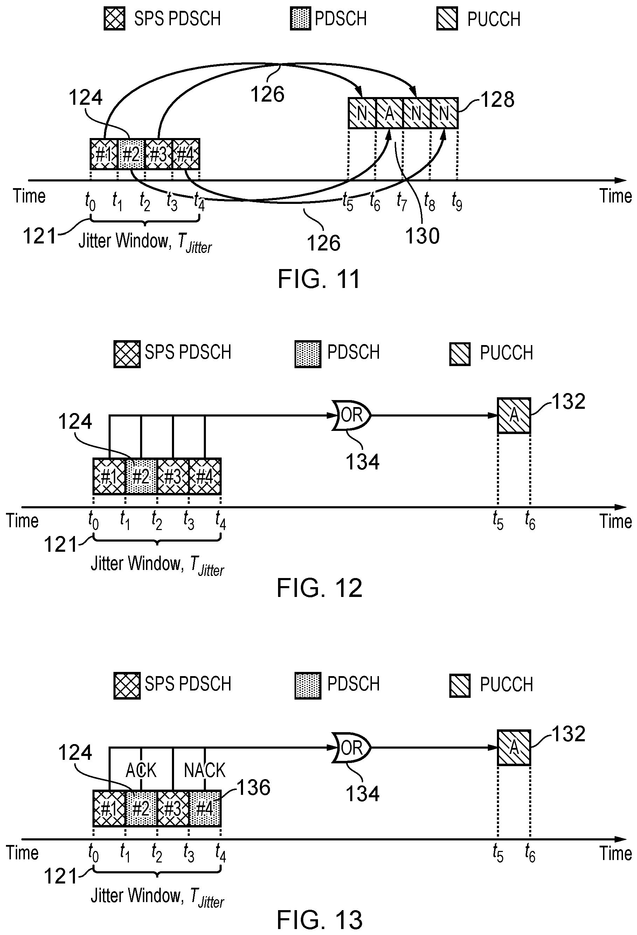

In Rel-16 SPS, the UE is required to feedback a NACK for an SPS that is unused, i.e. SPS resource that does not contain any PDSCH transmission. Therefore, using multiple-SPS configurations to handle jitter would lead to excessive HARQ-ACK overhead since only one of these SPS contains a valid PDSCH transmission. The excess HARQ-ACK overhead is illustrated by an example is shown in Figure 11, where M=4 SPS instances SPS#1, SPS#2, SPS#3, SPS#4 121 are configured within a jitter time window *T_{Jitter}.* That is, within the jitter time window containing *M* SPS instances SPS#1, SPS#2, SPS#3, SPS#4, only 1 out of *M* of these SPS instances 124 has a valid PDSCH and therefore there would be an excess of *M-1* HARQ-ACK feedbacks 126 (where *M*-1 feedbacks would be NACK, N) to be transmitted on a PUCCH 128. Following Rel-16 behaviour, the UE transmits a HARQ feedback A/N for all *M* HARQ-ACKs but only one HARQ-ACK 130, i.e. the one for SPS#2 transmitted between time *t*₆ to *t₇,* is beneficial to the gNB, thereby transmitting an excess of *M*-1=3 HARQ-ACK NACK, N feedbacks for SPS resource instances which have not been used.

Recognising this excessive HARQ-ACK overhead, it has been proposed in, for example, [5], [6], that the HARQ-ACK feedbacks for these *M* SPS instances within the jitter time window are bundled so that only a single HARQ-ACK feedback is sent, i.e. only one out of *M* HARQ-ACKs is fed back to the gNB. In [6], it is proposed to use an "OR" logical operator to perform the bundling, since *M*-1 HARQ-ACKs are expected to be NACK whilst only one of these *M* HARQ-ACKs can be ACK or NACK. An example is shown in Figure 12, where once again *M*=4 SPS instances SPS#1, SPS#2, SPS#3, SPS#4 121 are configured to handle jitter but here only a single HARQ-ACK is fed back 132 to the gNB by bundling all *M* HARQ-ACK feedbacks using a logical "OR" operator 132.

The proposal in [6] assumes that only one out of *M* SPS instances will be used. However, this is restrictive since the gNB cannot then use more than one out of the *M* SPS instances effectively, if there is other downlink traffic for the UE. If more than one SPS instance is being used, then the gNB would not be able to tell whether any of those used SPS instances contained a NACK due to the "OR" bundling and as a consequence of this, it may not perform retransmission of a NACKed SPS PDSCH, thereby reducing its reliability and increasing its latency. This is because the lower layers would not notice that there had been an error on the NACKed SPS PDSCH, while the time taken for higher layers to notice the NACK can be high, which will cause the increase in latency.

The overall reliability of the URLLC service can be reduced if some PDSCHs which are not received or are received erroneously are not indicated as being "NACK". An example is shown in Figure 13, where once again *M*=4 SPS instances SPS#1, SPS#2, SPS#3, SPS#4 121 are configured to handle jitter where the HARQ-ACK feedback for this group of SPS instances SPS#1, SPS#2, SPS#3, SPS#4 121 are bundled using a logical "OR" logical operator 134. Here, the gNB decides to use SPS#4 to transmit a PDSCH to the UE but the UE fails to decode it and so generates a NACK 136. Since a logical "OR" 134 is used to bundle all the HARQ-ACKs, the UE outputs a single ACK 132 to the gNB, which may lead to the gNB not performing any retransmission for the PDSCH in SPS#4 136.

Therefore, a technical problem to address is to reduce HARQ-ACK-type overhead for an over-configured SPS resource, for example that is used to handle jitter, but in a manner which enables the gNB to identify a failed SPS PDSCH that is actually used when more than one of these SPS instances of the over-configured SPS resource are used. At a higher level, a technical issue also exists for reducing HARQ-ACK overhead for a bundle or set of PDSCHs, where such PDSCHs may be dynamically granted or SPS PDSCHs. For example, referring to Figure 4, individual HARQ-ACKs for each of PDSCH#1, PDSCH#2, and PDSCH#3 are multiplexed into PUCCH#1 for transmission to the network. If the number of such PDSCHs increases, the overhead increases, as one HARQ-ACK is required to be transmitted for each of these PDSCHs. The same technical problem with the proposal in [6] applies to dynamically granted PDSCHs; transmitting an "OR" bundled HARQ-ACK for all PDSCHs may mean that one or more NACKed PDSCHs are missed and not retransmitted by the gNB. Embodiments of the present disclosure seek to provide solutions to such technical issues.

### HARQ-ACK Bundling for Different SPS Instances in an SPS Group

Example embodiments can provide a communications device (UE), which operates to receive downlink transmissions as for example HARQ data units according to the one or more HARQ type processes, via a plurality of instances of downlink resources, such as SPS instances #1, #2, #3, #4 ...., which form a group. Although example embodiments are described below for the example of SPS, embodiments are however are not limited to SPS resources and other example configurations of downlink resources can be used such as DG-PDSCH or configured grant.

According to example embodiments a communications device (UE) receives a plurality of downlink data units according to one or more HARQ processes transmitted via a group of downlink resource instances, divides the group of the plurality of downlink resource instances into a plurality of subsets of mutually exclusive resource instances from the group and generates for the group of downlink resource instances a plurality of indications of an acknowledgement, ACK, or negative acknowledgement, NACK, indicating whether each of the plurality received downlink data units was correctly received or not according to the one or more HARQ processes, and combines the plurality of the ACK or NACK indications to form a bundled indication for the group. The combining of the ACK/NACKs is based on logical operations within each sub-set and in some examples also between subsets. The subsets and the logical combination of the HARQ ACK/NACK indications may be selected to provide a reduction in uplink resources needed to provide an ACK/NACK feedback for the HARQ data units transmitted via the group and still enable the infrastructure equipment to determine whether there is a need for retransmission for one or more of these downlink data units. For example, embodiments can recognise that it is not necessary to represent all 2^{M} possibilities of ACK/NACK where M is the number of resource instances per group. The gNB can decide to re-transmit everything in one subset. So a subset could consist of two SPS resource instances that are represented by a single ACK/NACK bit. If NACK is reported then both of the SPS resource instances would be re-transmitted. So that would mean that there would be 2^{M} = 4 possible ACK/NACK combinations that are reported as a single bit. If the single bit is NACK, the gNB could retransmit both SPS instances

According to some example embodiments described in the following paragraphs, a set of SPS instances in an SPS Group are divided into two or more subsets, each of which forms an SPS subset, where bundling/compression operations on the HARQ-ACKs for each of the SPS instances are used in each SPS subset.

In another embodiment, the bundling and/or compression operations are different for different SPS subsets.

In another embodiment, the bundling and/or compression operations can be the same for some or all of the SPS subsets.

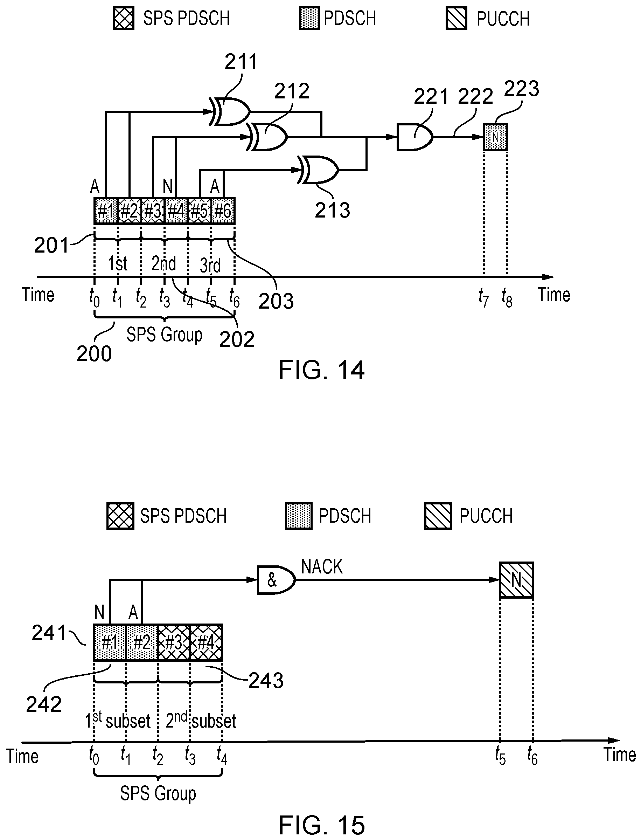

In another embodiment, the output of the bundling and/or compression operations of one or more SPS subsets can be further bundled and/or compressed according to another operation. That is the SPS instances in an SPS Group can have more than one step of bundling and/or compression. An example embodiment is shown in Figure 14.

According to the example embodiment shown in Figure 14, an SPS Group of downlink resources 200 is divided into three SPS downlink resource subsets 201, 202, 203. The configuration of the subsets 201, 202, 203 may be made by the gNB based on a packet arrival pattern in which the gNB determines from a rate of arrival is such that it is likely to be able to transmit a data unit in one out of every two of the SPS downlink resource instances. However, because of the packet jitter the gNB may not be able to determine in advance in which of the SPS instances of the subset 201, 202, 203 it will be able to transmit a downlink data unit. Furthermore, the gNB then ensures that it never transmits a PDSCH downlink data unit in two consecutive SPS resource instances #1, #2, #3, #4, #5, #6. As shown in the example embodiment of Figure 14, in the first subset 201, a PDSCH downlink transmission occurs in a first of the SPS resource instances #1, but as a result of jitter the next PDSCH downlink transmission of a data unit does not occur in the second subset 202 until a second of the SPS resource instances #4 of the subset 202, whereas a PDSCH downlink transmission occurs in a third of the SPS resource instance subsets 203 in a second of the two resource instances #6.

Based on an expected pattern of transmission of the PDSCH downlink data units a UE is configured to perform an operation to combine ACK/NACK responses indicating whether the UE was able to detect a downlink transmission in the corresponding SPS downlink resource #1, #2, #3, #4, #5 and #6. As shown in the example embodiment of Figure 14, for each of the subsets of the SPS resource instances 201, 202, 203, an XOR logical operator 211, 212, 213 is used to combine the ACK/NACK responses for each of the corresponding pairs of SPS downlink resource instances for SPS downlink resource #1, #2, #3, #4, #5 and #6. An output of each of the XOR logical operators 211, 212, 213 is then fed into an AND logical operator 221, which combines by bundling the output ACK/NACK responses from each of the logical operations 211, 212, 213 and forms an overall combined ACK/NACK response at an output 222 of the AND operation 221. This combined ACK/NACK response at the output 222 is then transmitted on a PUCCH 223 between time t7 and t8 by the communications device to give an overall ACK/NACK response for any downlink transmission in any of the SPS downlink resources #1, #2, #3, #4, #5, #6.

According to this example embodiment shown in Figure 14, the SPS instances in which downlink data is transmitted are shown with dark grey such as #1, #4, #6. A receiver of the UE is configured to decode the downlink transmission in each SPS PDSCH instance and determine whether the data has been correctly received. Accordingly, for these SPS PDSCH instances the UE can generate either an ACK A or a NACK N so that for each SPS PDSCH instance #1, #4, #6 the input to the respective logical operators 211, 213 can be either 1 or 0.

For SPS instances in which there is no transmission, such as the SPS instances #2, #3, #5 the UE's receiver does not detect any transmission and so the input to the logical operators 212, 213 is always a NACK = 0.

As shown in the example of Figure 14 a first of the PDSCH transmissions of a data unit in SPS resource instance #1 produces an ACK A, a second of the PDSCH transmissions of a data unit in SPS resource instance #4 produces a NACK N, and a third of the PDSCH transmissions of a data unit in SPS resource instance #6 produces an ACK A. Therefore, the bundled output formed at the output for transmission on the PUCCH is a NACK N.

As will be appreciated for the example embodiment of Figure 14, a group of the SPS resource instances is divided into subsets and an ACK/NACK feedback indication for each of the SPS resource instances of the subset are combined with a logical operator determined in accordance with an expected transmission pattern of data units in the group of SPS resource instances. The combination of the ACK/NACK feedback indications is configured to increase a likelihood of providing a bundled output as a NACK if one or more of the PDSCH transmissions of a downlink data unit is a NACK. For the example of Figure 14, the gNB ensures that no two SPS resource instances will be used to transmit PDSCH downlink data units. As such the XOR logical operator can detect an error even if the UE decodes two ACKs for a subset of resource instances which will be XOR-ed to produce an NACK. The AND operator for the output of each of the XOR gates will then ensure a NACK if one of the subsets produces a NACK. Whilst the logical operators and the subsets for the embodiment of Figure 14 are determined relative to expected arrival rates of packets for a particular channel, in other examples explained below the subsets and the logical operators may be determined using different considerations, such as for example a repetition of PDSCH data units. Although the subsets use the same logical operator XOR, it should be appreciated that this invention is not limited to using the same logical operator for different subsets but different subsets can use different operations. It should also be noted that the examples here conceptually use a logical operator to bundle the ACK/NACK feedback of each SPS instance, but this can be implemented by any other manner, e.g. the output of each SPS can be compared against a lookup table to give a bundled output.

From the above explanation, it will be appreciated that various logical operators can be used to combine the ACK/NACK indications for each of the SPS PDSCH resource instances within each subset and to combine output indications for each subset. The various logical operators could be AND, OR, NAND, NOR, EXOR etc. However according to example embodiments the logical operators are chosen to provide some compression of the total number of ACK/NACK indications for the SPS Group and ensure the gNB can detect NACKs for generating retransmissions. As will be appreciated each subset can use a different or the same bundling operation and there can be different levels.

It should be appreciated that although Figure 14 shows a 2-step bundling process, it can be expanded to more than two steps.

It should be appreciated that the UE may not try first to detect the presence of a PDSCH in an SPS instance, but instead may just try to decode a PDSCH in each SPS instance regardless of whether there was a PDSCH detected in the SPS instance or not. If there is no PDSCH in an SPS instance the UE would fail in its decoding process. Hence, in some UE implementations, the UE cannot distinguish between a NACK caused by the absence of PDSCH and a NACK caused by decoding failure.

In another example embodiment, two SPS subsets are defined, where a first SPS subset contains SPS instances with PDSCH downlink transmissions, in which downlink transmissions occur (used SPS instances) and a second SPS subset contains SPS instances without any PDSCH downlink transmissions (unused SPS instances). The UE is configured to determine which of the SPS instances are used and unused SPS instances as will be described below.

In another embodiment, where two SPS subsets are defined, a logical "AND" is used to bundle the HARQ-ACK responses for the SPS instances in the first SPS subset containing used SPS instances. The SPS instances in the second SPS subset are not used for bundling. An example is shown in Figure 15, in which an SPS Group 241 has four SPS instances #1, #2, #3, #4, which are divided into a first SPS subset 242 and a second SPS subset 243. The gNB transmits two PDSCH downlink transmissions to the UE using SPS#1 and SPS#2 whilst SPS#3 and SPS#4 are not used. Hence SPS#1 and SPS#2 are in the first SPS subset 242 and SPS#3 and SPS#4 are in the second SPS subset 243. Here the UE failed to decode the PDSCH in SPS#1 and managed to decode the PDSCH in SPS#2. Applying the logical "AND" the UE feeds back a NACK to the gNB, because a logical NACK (0) AND ACK (1) produces a NACK (0). The gNB can therefore retransmit one or both PDSCHs to the UE.

In another example embodiment, the SPS instances of the second subset 243 of Figure 15 (as discussed above) are used for re-transmitting one or both PDSCH transmissions that were previously transmitted to the UE but were not decoded successfully by the UE. There are latency requirements in URLLC so there is no point re-transmitting PDSCH that cannot meet the latency requirement. Hence, while PDSCH could be sent in SPS#3 or SPS#4 in Figure 15, there is no need for the UE to send ACK / NACK information for these SPS instances, as they would not be re-transmitted by the gNB in any case, because there is no point re-transmitting data that has already failed to meet its latency requirement.

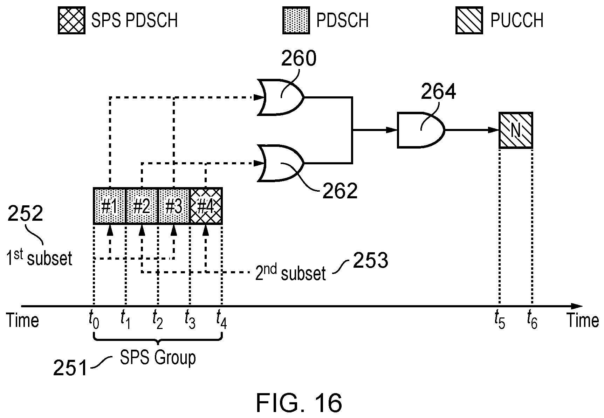

In another example embodiment, a second SPS subset can be a repetition of a first SPS subset, where the number of SPS instances in the first SPS subset and the second SPS subset are the same. An example is shown in Figure 16, where an SPS Group 251 has four SPS instances #1, #2, #3, #4, and these SPS instances are divided into a first SPS subset 252 and a second SPS subset 253 where the SPS instances in these SPS subsets 252, 253 are repetitions of each other. Here SPS#1 and SPS#3 are repetitions or retransmissions of the same PDSCH and SPS#2 and SPS#4 are repetitions of another PDSCH. The gNB need not provide a repetition. In this example, the gNB repeated the PDSCH in SPS#1 using the resource in SPS#3 but it does not repeat the PDSCH in SPS#2. Here, the HARQ-ACK responses of the SPS instances in each SPS subset are bundled using logical "OR" operators 260, 262 and the bundled outputs are further bundled into a logical "AND" operator 264. In the example of Figure 16 each subset includes PDSCH instances in which the same downlink data transmissions are made, the respective downlink transmissions being repeated within the respective first and the second SPS subsets. In other examples the subsets may be formed such that different downlink data transmissions are made within the subsets so that the repeated transmission occurs for PDSCH instances in different subsets.

It will be appreciated that embodiments are not limited to only two SPS subsets in an SPS Group and other embodiments can have more than two SPS subsets per SPS Group. It will also be appreciated that the first SPS subset can use a different operation to the logical "AND" operation described in some implementations above, such as OR or XOR. In one example, the first subset can indicate the number of SPS instances within the first subset for which ACK is determined, as discussed in our co-pending European patent application number P121801EP the contents of which are incorporated herein by reference [7].

### Configuring and/or Indicating an SPS Group

Several arrangements of embodiments of the present technique are proposed below, regarding how the SPS Group (or indeed, more generally, a group of PDSCH transmission occasions) is determined. It should be appreciated that this SPS/PDSCH transmission occasion Group can be used for purposes other than the handling of jitter.

In an arrangement of embodiments of the present disclosure, the SPS Group is RRC configured. In other words, the communications device is configured to receive Radio Resource Control, RRC, signalling from the wireless communications network, and to determine, based on the RRC signalling, the plurality of SPS instances that form the SPS group (or, more generally, the plurality of downlink transmission occasions). In some implementations of this arrangement, each SPS instance can be RRC configured with a group ID, such that SPS instances that share the same group ID may be determined to belong to the same SPS Group

In another arrangement of embodiments of the present disclosure, the SPS Group is dynamically indicated. In other words, the communications device is configured to receive a dynamic indication from the wireless communications network, and to determine, based on the dynamic indication, the plurality of SPS instances that form the SPS group (or, more generally, the plurality of downlink transmission occasions).

In some implementations of this arrangement, the dynamic indicator may be the activation DCI that activates an SPS instance. In other words, the communications device is configured to receive, from the wireless communications network, an activation DCI indicating that one or more of the SPS resource instances are activated, wherein a field of the activation DCI comprises the dynamic indication.

In some such implementations, a new field is used to indicate the SPS Group in the activation DCI; e.g., this new field is introduced for the specific and dedicated purpose of carrying the dynamic indication. This new field can indicate the SPS Group ID for each activated SPS instance.

In some other such implementations, an existing field in the activation DCI is used to indicate the SPS Group. This said existing field can be re-interpreted to explicitly carry the dynamic indication of the SPS group in addition to its existing purpose, or may alternatively in some manner implicitly indicate the SPS Group. For example, in an arrangement of embodiments of the present disclosure, the existing DCI field may be the *"PDSCH-to-HARQ_feedback timing indicator"* field where the *K*₁ value is used to implicitly indicate the SPS Group. Here, the SPS instances with *K*₁ values that point to the same PUCCH in a slot or sub-slot for their corresponding HARQ-ACKs would belong to the same SPS Group. In other words, the existing field indicates, for each of the SPS resource instances, a resource unit of the wireless radio interface in which the uplink control channel should be transmitted. The communications device is configured to determine that the SPS group is formed by the plurality of SPS instances when the existing field indicates that the uplink control channel should be transmitted in the same resource unit for all of the plurality of SPS instances.

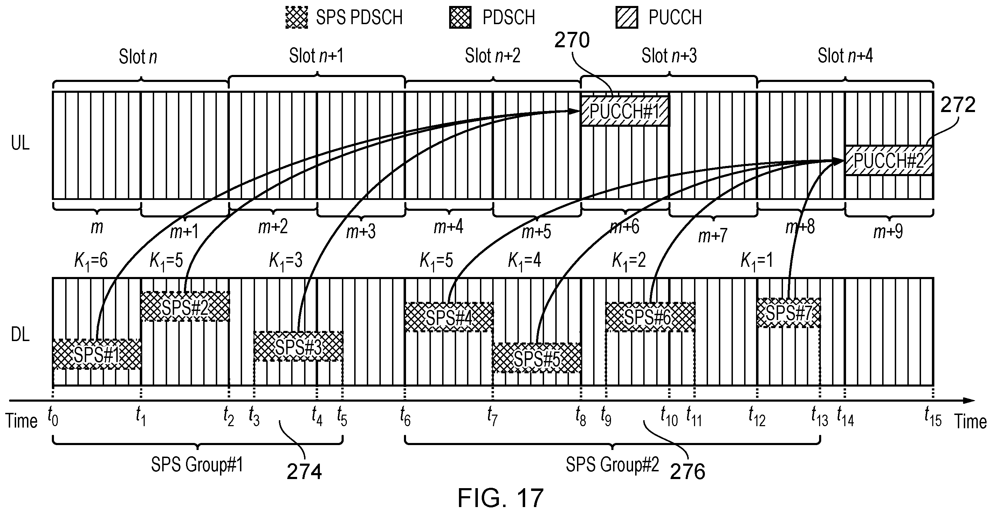

An example is shown in Figure 17, where a seven-OFDM symbol sub-slot based PUCCH is used and the gNB configures seven SPS configurations labelled as SPS#1, SPS#2, SPS#3, SPS#4, SPS#5, SPS#6 and SPS#7. These seven SPS configurations are activated individually, where their activation DCIs indicated *K*₁ values of {6, 5, 3, 5, 4, 2, 1} for SPS#1, SPS#2, SPS#3, SPS#4, SPS#5, SPS#6 and SPS#7 respectively. The *K*₁ values lead to the HARQ-ACK feedbacks for SPS#1, SPS#2 and SPS#3 being carried by PUCCH#1 270 in sub-slot *m*+6 and the HARQ-ACK feedbacks for SPS#4, SPS#5, SPS#6 and SPS#7 being carried by PUCCH#2 272 in sub-slot *m*+9. As per this arrangement, since SPS#1, SPS#2 and SPS#3 share a PUCCH 270, i.e. PUCCH#1, these SPS instances are determined by the UE to belong to an SPS Group 274, labelled as SPS Group#1. Similarly, SPS#4, SPS#5, SPS#6 and SPS#7 belong to another SPS Group 276, i.e. SPS Group#2, since their HARQ-ACKs are carried by the same PUCCH, i.e. PUCCH#2.

In another arrangement of embodiments of the present disclosure, the MAC-CE in a PDSCH of a used SPS instance will indicate which other SPS instances belong to the same SPS Group. In other words, the communications device is configured to determine, based on a Medium Access Control, MAC, Control Element, CE, within one of the received downlink channels, the plurality of SPS instances that form the SPS group (or, more generally, the plurality of downlink transmission occasions).

### Configuring and/or Indicating the SPS Subsets

As indicated above there are various example arrangements in which the SPS subsets may be indicated to a UE according to various embodiments. In one example the SPS subsets are RRC configured. For this example embodiment a Subset ID can be assigned to each SPS instance in an SPS Group and SPS instances that share the same Subset ID belong to the same SPS subset.

According to other example embodiments, the SPS subsets may be indicated and configured dynamically according to different methods which indicate the SPS subsets in an SPS Group.

In another example embodiment, an activation DCI that activates an SPS instance can be adapted to indicate the SPS subset of the SPS instance within an SPS Group.

In another example embodiment, a new DCI field is introduced in the activation DCI to indicate the SPS subset of an SPS instance in an SPS Group. For example, a single bit can be introduced to indicate whether an activated SPS instance belongs to a first SPS subset or a second SPS subset, the single bit being able to define a group of SPS instances having two subsets.

In another example embodiment, an existing DCI field is re-interpreted to indicate the SPS subset.

In another example embodiment, the said existing DCI field is the *"PUCCH Resource Indicator"* (PRI) field in an activation DCI. Here, SPS instances that share the same PRI belong to the same subset.

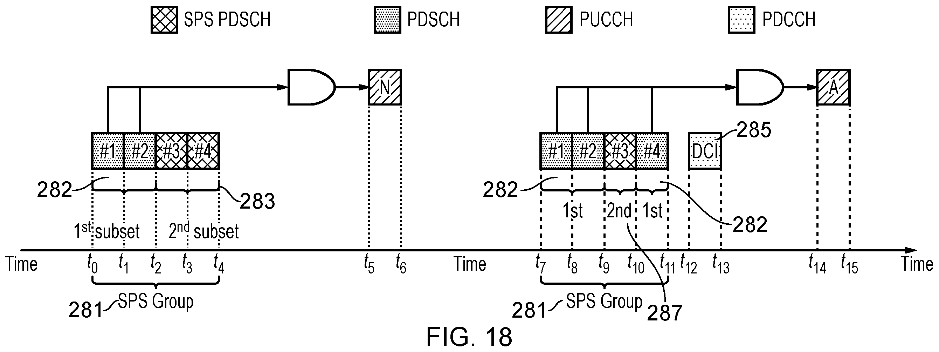

In another embodiment, the gNB sends a DCI, which is not an activation DCI, to indicate changes to SPS subsets. This DCI can be sent just prior to an SPS Group, during the SPS Group or right after the SPS Group but before the UE processes the bundling of the HARQ ACK/NACK responses for the PDSCH downlink transmissions. An example embodiment is shown in Figure 18.

According to the example embodiment shown in Figure 18**Error! Reference source not found**., an SPS Group 281 has four SPS instances #1, #2, #3, #4, which are divided into a first SPS subset 282 and a second SPS subset 283. Here a logical "AND" operator is used to bundle the HARQ-ACK responses of the SPS instances in a first SPS subset 282. At time *t*₀, the first SPS subset 282 consists of SPS#1 and SPS#2. At time *t*₇, the gNB decided to change the SPS subset settings and so sends a DCI 285 right after a second occurrence of the SPS Group 281 at time *t*₁₂ to add SPS#4 into the first SPS subset 282, removing the SPS#4 from the second SPS subset 283 and adding it to the first SPS subset 282 as an additional SPS instance. The second SPS subset 283 then only includes the SPS#3 instance after SPS#4 has been removed from the second SPS subset 283.

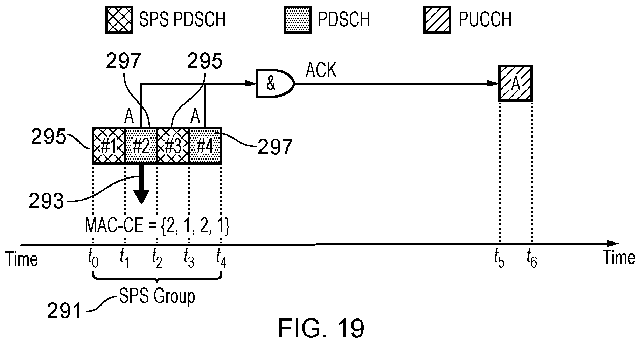

According to another example embodiment, the SPS subset is indicated in a Medium Access Control Element (MAC-CE) of a PDSCH in one or more SPS instances in an SPS Group. An example is shown in Figure 19, in which an SPS Group 291 has four SPS instances SPS#1, SPS#2, SPS#3 and SPS#4. Here SPS#2 contains a PDSCH and a MAC-CE of this PDSCH, represented by an arrow 293 indicates that SPS#1 and SPS#3 belong to a second SPS subset 295 and SPS#2 and SPS#4 belong to the first SPS subset 297. The PDSCH in SPS#4 can also repeat the SPS subset indication in its MAC-CE to improve its reliability.

In the following embodiments, the SPS subset is determined by the UE.

In some embodiments, the SPS subset to which an SPS instance belongs is determined by the presence or absence of a PDSCH downlink transmission in the SPS instance. In an example embodiment with two SPS subsets, the UE determines whether an SPS instance in an SPS Group belongs to a first of the two SPS subsets or a second of the two SPS subsets depending on whether or not there is a PDSCH present in that SPS instance.

In other embodiments, the UE detects the presence of PDSCH downlink transmission in each SPS instance in an SPS Group, by detecting for example the presence or absence of Demodulation Reference Signals (DMRS). By detecting the DMRS in a PDSCH downlink transmission in an SPS instance, the UE can determine whether PDSCH downlink transmission has been sent in this SPS instance. If the UE detects the presence of a PDSCH downlink transmission in an SPS instance, that SPS instance belongs to a first of two SPS subsets and if the UE does not detect any PDSCH downlink transmission in the SPS instance, then that SPS belongs to a second of the SPS subsets.

In other embodiments, the UE can determine whether an SPS instance contains a PDSCH downlink transmission based on an indication in a MAC-CE of a PDSCH downlink transmission in one of the SPS instances. Here the MAC-CE will indicate whether one or more SPS instances contains a PDSCH downlink transmission.

Example embodiments may utilize techniques in which a MAC-CE is used to indicate presence/absence of PDSCH downlink transmission in one or more SPS instances as disclosed in European patent application 20201191.2 the contents of which is incorporated herein by reference.

As will be appreciated from the above-described embodiments, logical operations which may be used to combine or to bundle operations for each SPS subset in an SPS subset or SPS Group need to be indicated to the UE, so that the UE can combine HARQ ACK/NACK feedback responses to form a combined response of an SPS Group which will be correctly interpreted by a gNB. The following describes example embodiments for indicating these logical operations to the UE.

In one example embodiment, a combining or bundling operation to be used on each SPS subset in an SPS Group maybe RRC configured. For example, the gNB can configure three SPS subsets for an SPS Group and a first of the three SPS subsets may be configured to apply a logical "AND", the second of the three SPS subsets may be configured to apply a logical "OR" and a third of the three SPS subsets may be configured to apply a logical "XOR". In a further example, the combining or bundling operation can be defined by truth tables configured by RRC, where the truth table contains associations between sets of input bits and output bits. The truth table can be implemented as a lookup table containing associations between sets of input bits and output bits. RRC signaling may configure more than one truth table where each truth table is associated with an index. RRC signaling may then indicate for each SPS subset which truth table is to be applied to that SPS subset by indicating the index to be used for that SPS subset.

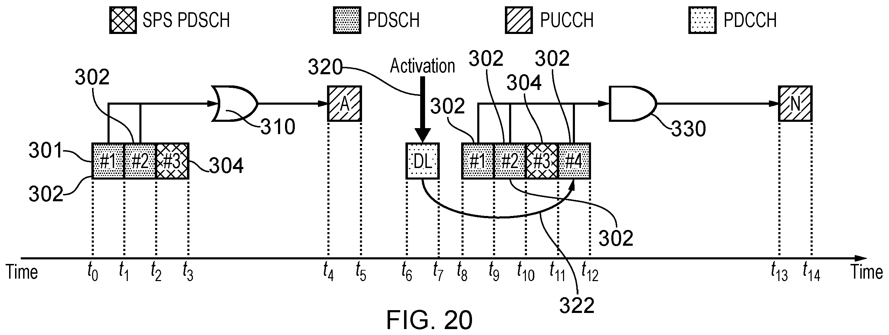

In other example embodiments, a combining or bundling operation used for each SPS subset may be indicated in an activation or deactivation DCI for the SPS resources. According to such embodiments the gNB can update a combining or bundling operation of one or more SPS subsets when it activates or deactivates an SPS instance. An example embodiment is shown in Figure 20.

According to the embodiment show in Figure 20 an SPS Group 301 consisting of three SPS instances SPS#1, SPS#2 and SPS#3, starts at time *t₀.* The SPS Group 301 is divided into two subsets where SPS#1 and SPS#2 belong to a first SPS subset 302 and SPS#3 belongs to a second SPS subset 304. A logical "OR" operator 310 is used to form a HARQ-ACK response signal for the first SPS subset 302 and nothing is used for the second SPS subset 304. At time *t*₆, the gNB activates SPS#4 in the SPS Group 301 by transmitting a downlink activation signal represented by an arrow 320, which indicates that SPS#4 has been configured to belong to the first SPS subset 302 as represented by an arrow 322. Furthermore, the downlink activation signal 320 indicates that the gNB has configured the bundling operation for the first SPS subset 302 to use a logical "AND" operator 330.

In other example embodiments, the gNB can disable any bundling operation for the UE and instead the UE feedbacks the HARQ-ACK status of each SPS instance. This disabling/enabling of bundling operation can be indicated in the activation or deactivation DCI.

In another embodiment, the UE determines whether to apply any bundling operations based on the number of SPS instances in the SPS Group. If the number of SPS instance is less than a threshold *T_{SPS}* then the UE reverts to providing HARQ-ACK feedback for every SPS instance. *T_{SPS}* can be RRC configured, indicated in the DCI or fixed in the specifications.

### Summary of Operation

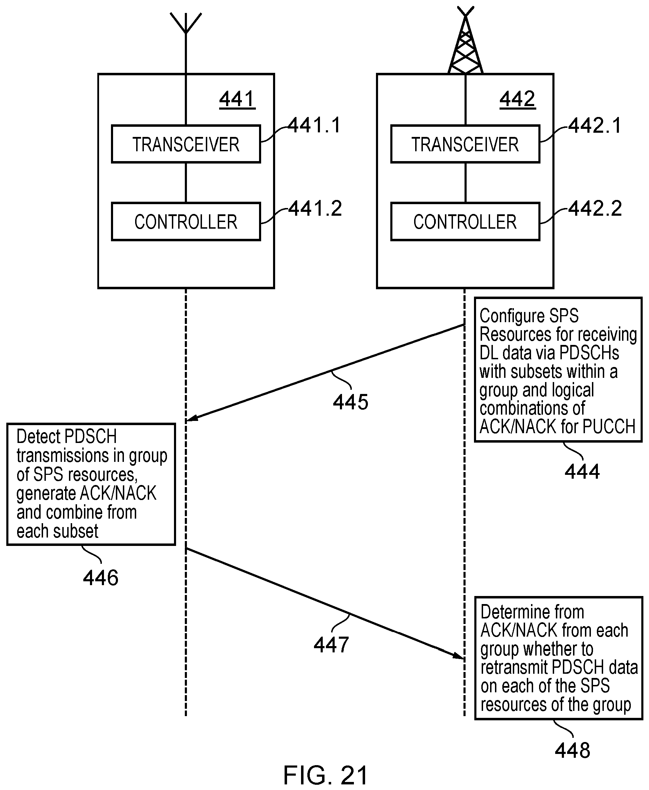

Figure 21 shows a part schematic, part message flow diagram representation of a wireless communications network comprising a communications device 441 and an infrastructure equipment 442 in accordance with at least some embodiments of the present technique. The communications device 441 is configured to transmit signals to and/or receive signals from the wireless communications network, for example, to and from the infrastructure equipment 442. Specifically, the communications device 441 may be configured to transmit data to the wireless communications network (e.g. to the infrastructure equipment 442) via a wireless radio interface provided by the wireless communications network (e.g. the Uu interface between the communications device 441 and the Radio Access Network (RAN), which includes the infrastructure equipment 442). The communications device 441 and the infrastructure equipment 442 each comprise a transceiver (or transceiver circuitry) 441.1, 442.1, and a controller (or controller circuitry) 441.2, 442.2. Each of the controllers 441.2, 442.2 may be, for example, a microprocessor, a CPU, or a dedicated chipset, etc.

As shown in the example of Figure 21, the controller circuitry 442.1 is configured with the transceiver circuitry 442.1 to transmit control information such as via DCI or MAC-CE or using RRC signalling to configure the UE to receive downlink data via SPS resource instances. The SPS resource instances are formed as groups via which PDSCH downlink data unit transmissions are made depending on a transmission pattern of the data units in the SPS resources instance of the group. The transmission pattern may be determined for example by a rate of arrival of packets to be transmitted, packet jitter or a repetition of data units according to any of the example embodiments explained above. Based on the transmission pattern, the gNB determines a division of the SPS resource instances of the group into a plurality of subsets and determines for each subset a logical operator for combining the ACK/NACK indications for each SPS resource instance of the subset. The gNB also determines a logical operator for combining the outputs of each of the logical operators for the subsets. The subsets and the logical operators are communicated to the UE. The transmission of the PDSCH data units is represented by an arrow 445.

The transceiver circuitry 441.1 and the controller circuitry 441.2 of the communications device 441 are configured in combination to receive 446, from the wireless communications network (e.g. from the infrastructure equipment 442), data units on one or more downlink channels, each of the downlink channels being within one of a plurality of downlink transmission occasions, to determine 446, for each of the downlink channels, whether or not the data units have been successfully received by the communications device 441. According to the configuration received from the gNB, the UE divides the SPS resources instances of the group into subsets and for each resource instance of the subset either determines an ACK/NACK for each instance or first detects whether a PDSCH downlink transmission was made in that resource instance and then generates an ACK/NACK for each transmission. The ACK/NACKs for each resource instance is then combined with the others for the subset according to the configured logical operator as explained above and the output of the logical operators combined to form a single ACK/NACK for the group. The UE then transmits 448, to the wireless communications network (e.g. to the infrastructure equipment 442), the single ACK/NACK for each group of SPS resource instances. The gNB then determines whether to retransmit the PDSCH downlink data units for the group according to the ACK/NACK indication 448.

Essentially, embodiments of the present technique propose that a communications device (UE) which is configured to bundle ACK/NACK responses for a plurality of downlink transmissions into different subgroups of the downlink resources and combine the ACK/NACK responses for each of the downlink resources in each of the sub-groups into a combined ACK/NACK representation signal, whereby the combining is with the effect that a plurality of downlink transmissions are made in a plurality of the downlink resources and the communications device forms a combined ACK/NACK representation signal depending on the subsets and logical combinations.

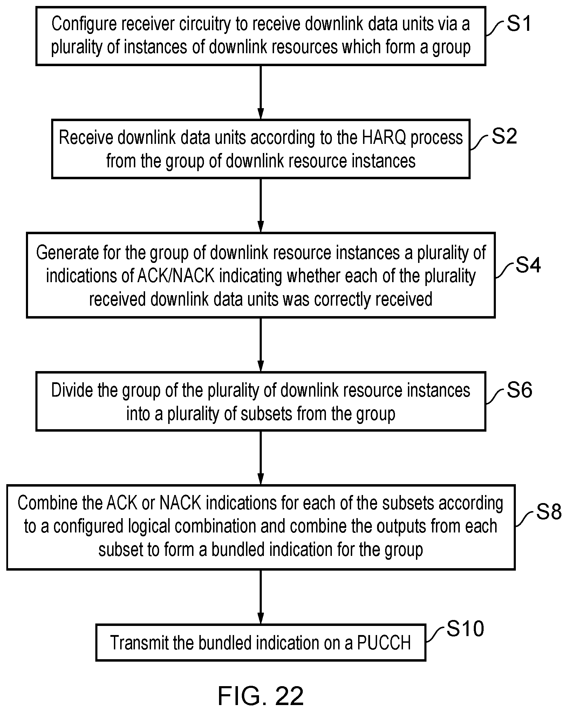

Figure 22 shows a flow diagram illustrating an example operation of a communications device (UE) in a communications system in accordance with embodiments of the present technique. The process shown by Figure 22 is a method of operating a communications device configured to transmit signals to and/or to receive signals from a wireless communications network (e.g. to or from an infrastructure equipment of the wireless communications network) in order to receive downlink data. The flow diagram is summarized as follows:
At first operation, S1, a UE receives control information as for example a DCI or MAC-CE or using RRC signalling to configure the UE to receive downlink data via SPS resource instances. The SPS resource instances are groups of instances. The control information also indicates a division of the SPS resource instances of the groups into a plurality of subsets and determines for each subset a logical operator for combining the ACK/NACK indications for each SPS resource instance of the subset. The control information also indicates a logical operator for combining the outputs of each of the logical operators for the subsets. The logical combinations and the division of the subsets may be determined for example according to a traffic profile expected or a transmission technique of the data units.

In a second operation S2, the UE receives PDSCH downlink data unit transmissions according to a transmission pattern of the data units in the SPS resources instance of each group. The UE determines for each of the resource instances of each group an ACK/NACK for each instance or first detects whether a PDSCH downlink transmission was made in that resource instance and then generates an ACK/NACK for each transmission S4. According to the configuration received from the network, the UE at S6 divides the SPS resources instances of the group into subsets and at S8 for each of the resource instances of the subset combines the ACK/NACK indication with the others for the subset according to the configured logical operator and then combines the output of the logical operators to form a single ACK/NACK for the group. At S10, the UE then transmits the bundled output indication, to the wireless communications network.

Those skilled in the art would appreciate that the method shown by Figure 22 may be adapted in accordance with embodiments of the present technique. For example, other intermediate steps may be included in the method, or the steps may be performed in any logical order.

Though embodiments of the present technique have been described largely by way of the example communications system shown in Figures 1, 2 and 3, and described by way of the arrangements shown by Figures 14 to 22, it would be clear to those skilled in the art that they could be equally applied to other systems to those described herein.

Those skilled in the art would further appreciate that such infrastructure equipment and/or communications devices as herein defined may be further defined in accordance with the various arrangements and embodiments discussed in the preceding paragraphs. It would be further appreciated by those skilled in the art that such infrastructure equipment and communications devices as herein defined and described may form part of communications systems other than those defined by the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein, the scope of the invention is defined by the appended claims. Additionally, although a feature may appear to be described in connection with particular embodiments, one skilled in the art would recognise that various features of the described embodiments may be combined in any manner suitable to implement the technique.

### References

[1] Holma H. and Toskala A, "LTE for UMTS OFDMA and SC-FDMA based radio access", John Wiley and Sons, 2009.
[2] TR 38.913, "Study on Scenarios and Requirements for Next Generation Access Technologies (Release 14)", third Generation Partnership Project, v14.3.0.
[3] RP-190726, "Physical layer enhancements for NR ultra-reliable and low latency communication (URLLC)", Huawei, HiSilicon, RAN#83.
[4] RP-201310, "Revised WID: Enhanced Industrial Internet of Things (IoT) and ultra-reliable and low latency communication (URLLC) support for NR," Nokia, Nokia Shanghai Bell, RAN#88e.
[5] R1-2007655, "HARQ-ACK enhancements for Rel-17 URLLC," vivo, RAN WG1#103-e.
[6] R1-2008984, "Discussion on prioritized UE HARQ feedback enhancements for URLLC/IIoT," Intel Corporation, RAN WG1#103-e.
[7] European patent application 20201191.2

## Claims

1. A method of operating a communications device (14) comprising
configuring receiver circuitry (48) of the communications device to receive downlink data units according to one or more Hybrid Automatic Repeat Request, HARQ, type processes, via a plurality of instances of downlink resources of a wireless access interface provided by a wireless communications network, which plurality of instances of downlink resources form a group,
receiving, by the receiver circuitry, a plurality of downlink data units according to the one or more HARQ processes transmitted via the group of downlink resource instances,
generating for the group of downlink resource instances a plurality of indications of an acknowledgement, ACK, or negative acknowledgement, NACK, indicating whether each of the plurality of received downlink data units was correctly received or not according to the one or more HARQ processes,
combining a plurality of the ACK or NACK indications selected from the ACK or NACK indications generated for the plurality of downlink resource instances of the group to form a bundled indication for the group of the plurality of downlink resource instances, and
transmitting the bundled indication to the wireless communications network via an uplink resource of the wireless access interface, wherein the combining the plurality of the ACK or NACK indications to form the bundled indication for the group of the plurality of downlink resource instances comprises
dividing the group of the plurality of downlink resource instances into a plurality of subsets of downlink resource instances each comprising a mutually exclusive selection of a plurality of the downlink resource instances from the group, and
forming the bundled indication for the group of the plurality of downlink resource instances by selectively combining the ACK or NACK indications from a plurality of the downlink resource instances of at least one of the plurality of subsets, wherein
the forming of the bundled indication for the group of the plurality of downlink resource instances comprises
combining the ACK or NACK indications from a plurality of the downlink resource instances of the at least one of the plurality of subsets according to a logical operator to produce as an output the bundled indication representing an ACK or NACK according to the logical combination of the ACK or NACK indications from the plurality of downlink resource indications selected from the subset, or
the forming of the bundled indication for the group of the plurality of downlink resource instances comprises
for each of at least two of the plurality of the subsets of downlink resource instances combining the ACK or NACK indications from a plurality of the downlink resource instances of the subset according to a logical operator to produce as an output an indication representing an ACK or NACK for the subset according to the logical combination of the ACK or NACK indications from the plurality of downlink resource indications selected from the subset, and
forming the bundled indication for the group of the plurality of downlink resource instances from the output indication representing an ACK or NACK for each of the at least two of the plurality of the subsets of downlink resource instances

2. A method according to claim 1, wherein the forming of the bundled indication for the group of the plurality of downlink resource instances comprises
combining the output indication representing an ACK or NACK for each of the at least two of the plurality of the subsets of downlink resource instances according to a logical operator.

3. A method according to claim 1, wherein the logical operator which is used to combine the ACK or NACK indications from a plurality of the downlink resource instances for each of the at least two subsets is a different logical operator for each of the at least two subsets.

4. A method according to claim 1, wherein the logical operator which is used to combine the ACK or NACK indications from a plurality of the downlink resource instances for each of the at least two subsets is the same logical operator for each of the at least two subsets.

5. A method according to claim 1, wherein the generating, for the group of downlink resource instances, the plurality of indications of an ACK, or a NACK, indicating whether each of the plurality received downlink data units was correctly received or not comprises
generating for each of the downlink resource instances of each of the subsets of downlink resource instances of the group an ACK or a NACK indicating whether or not a downlink data unit was received correctly in the downlink resource instance of the group whether or not a downlink data unit was transmitted in the downlink resource instance.

6. A method according to claim 1, wherein the generating, for the group of downlink resource instances, the plurality of indications of an ACK, or a NACK, indicating whether each of the plurality received downlink data units was correctly received or not comprises
determining for each of the downlink resource instances of each of the subsets of downlink resource instances of the group whether one of the plurality downlink data units was received in that downlink resource instance, and
generating for each of the downlink resources instances in which one of the plurality downlink data units is determined to have been received in that downlink resource instance an ACK or a NACK indicating whether or not a downlink data unit was received correctly in the downlink resource instance of the group, an ACK or a NACK being generated only for a downlink resource instance in which a downlink data unit was transmitted.

7. A method according to claim 6, wherein the dividing the group of the plurality of downlink resource instances into a plurality of subsets of downlink resource instances each comprising a mutually exclusive selection of a plurality of the plurality of downlink resource instances from the group comprises
dividing the group of the plurality of downlink resource instances into two subsets of downlink resource instances based on whether it has been determined that one of the plurality of downlink data units was transmitted in the downlink resource instance, the two subsets of the downlink resource units comprising a subset of downlink resources units in which one of the downlink data units was transmitted and a subset of downlink resources units in which no downlink data units was transmitted.

8. A method according to claim 7, wherein the forming the bundled indication for the group of the plurality of downlink resource instances by selectively combining the ACK or NACK indications from a plurality of the downlink resource instances comprises
combining the ACK or NACK indication for each of the downlink resource instances for the subset of downlink resources instance in which the downlink data units were transmitted using a logical AND operator.

9. A method according to claim 1, wherein the one or more of the received plurality of data units in one or more of the downlink resource instances of the group are re-transmissions from an earlier group of downlink resource instances, and the dividing the group of the plurality of downlink resource instances into a plurality of subsets of downlink resource instances comprises
dividing the group of the plurality of downlink resource instances into the plurality of subsets of downlink resource instances based on whether the subset includes re-transmission of downlink data units from the earlier group.

10. A method according to claim 1, wherein the one or more of the received plurality of data units have been transmitted repeatedly in one or more of the downlink resource instances of the group, and the dividing the group of the plurality of downlink resource instances into a plurality of subsets of downlink resource instances comprises
dividing the group of the plurality of downlink resource instances into the plurality of subsets of downlink resource instances based on the repeated transmission of the same downlink data unit, the subsets including a plurality of downlink resource instances in which the same downlink data unit is repeated or the subsets including a plurality of downlink resource instances in which the downlink data units are different and repeated between subsets.

11. A method according to claim 1, wherein the configuring the receiver circuitry of the communications device to receive the downlink data units via the plurality of instances of the downlink resources of the group comprises
receiving from the wireless communications network an indication of the configuration for the group of the plurality of downlink resource instances of the wireless access interface.

12. A method according to claim 11, wherein the indication of the configuration of the group of the plurality of downlink resource instances is received using Radio Resource Configuration, RRC, signalling.

13. A communications device (14) for operation with a wireless communications network, the communications device comprising
receiver circuitry (48) configured to receive signals transmitted via a wireless access interface provided by the wireless communications network,
transmitter circuitry (49) configured to transmit signals via the wireless access interface, and
controller circuitry (44) configured to control the transmitter circuitry and the receiver circuitry, wherein the controller circuitry is configured
to configure the receiver circuitry to receive downlink data units according to one or more Hybrid Automatic Repeat Request, HARQ, type processes, via a plurality of instances of downlink resources of a wireless access interface provided by the wireless communications network, which plurality of instances of downlink resources form a group,
to control the receiver circuitry to receive a plurality of downlink data units according to the one or more HARQ processes transmitted via the group of downlink resource instances,
to generate for the group of downlink resource instances a plurality of indications of an acknowledgement, ACK, or negative acknowledgement, NACK, indicating whether each of the plurality of received downlink data units was correctly received or not according to the one or more HARQ processes,
to combine a plurality of the ACK or NACK indications selected from the ACK or NACK indications generated for the plurality of downlink resource instances of the group to form a bundled indication for the group of the plurality of downlink resource instances, and
to control the transmitter circuitry to transmit the bundled indication to the wireless communications network via an uplink resource of the wireless access interface, wherein the controller circuitry is configured in combination with the receiver circuitry
to divide the group of the plurality of downlink resource instances into a plurality of subsets of downlink resource instances each comprising a mutually exclusive selection of a plurality of the downlink resource instances from the group, and
to form the bundled indication for the group of the plurality of downlink resource instances based on selectively combining the ACK or NACK indications from a plurality of the downlink resource instances of at least one of the plurality of subsets, wherein
the controller circuitry is configured to form the bundled indication for the group of the plurality of downlink resource instances by combining the ACK or NACK indications from a plurality of the downlink resource instances of the at least one of the plurality of subsets according to a logical operator to produce as an output the bundled indication representing an ACK or NACK according to the logical combination of the ACK or NACK indications from the plurality of downlink resource indications selected from the subset, or
the controller circuitry is configured to form the bundled indication for the group of the plurality of downlink resource instances by combining
for each of at least two of the plurality of the subsets of downlink resource instances the ACK or NACK indications from a plurality of the downlink resource instances of the subset according to a logical operator to produce as an output an indication representing an ACK or NACK for the subset according to the logical combination of the ACK or NACK indications from the plurality of downlink resource indications selected from the subset, and
to form the bundled indication for the group of the plurality of downlink resource instances from the output indication representing an ACK or NACK for each of the at least two of the plurality of the subsets of downlink resource instances.

14. A method of operating an infrastructure equipment (10) forming part of a wireless communications network, the method comprising
transmitting to a communications device (14) control information for configuring the communications device to receive downlink data units according to one or more Hybrid Automatic Repeat Request, HARQ, type processes, via a plurality of instances of downlink resources of a wireless access interface provided by the wireless communications network, which plurality of instances of downlink resources form a group,
transmitting a plurality of downlink data units according to the one or more HARQ processes transmitted via the group of downlink resource instances,
receiving a bundled indication via an uplink resource of the wireless access interface for the group of downlink resource instances, indicating whether one or more of the plurality of downlink data units transmitted via the group of downlink resources instances was received correctly or incorrectly respectively, and
re-transmitting one or more of the plurality of downlink data units according to the bundled indication, wherein the bundled indication is formed by
generating for the group of downlink resource instances a plurality of indications of an acknowledgement, ACK, or negative acknowledgement, NACK, indicating whether each of the plurality of received downlink data units was correctly received or not respectively according to the one or more HARQ processes,
dividing the group of the plurality of downlink resource instances into a plurality of subsets of downlink resource instances each comprising a mutually exclusive selection of a plurality of the downlink resource instances from the group, and
forming the bundled indication for the group of the plurality of downlink resource instances by selectively combining the ACK or NACK indications from a plurality of the downlink resource instances of at least one of the plurality of subsets, wherein
the forming of the bundled indication for the group of the plurality of downlink resource instances comprises
combining the ACK or NACK indications from a plurality of the downlink resource instances of the at least one of the plurality of subsets according to a logical operator to produce as an output the bundled indication representing an ACK or NACK according to the logical combination of the ACK or NACK indications from the plurality of downlink resource indications selected from the subset, or
the forming of the bundled indication for the group of the plurality of downlink resource instances comprises
for each of at least two of the plurality of the subsets of downlink resource instances combining the ACK or NACK indications from a plurality of the downlink resource instances of the subset according to a logical operator to produce as an output an indication representing an ACK or NACK for the subset according to the logical combination of the ACK or NACK indications from the plurality of downlink resource indications selected from the subset, and
forming the bundled indication for the group of the plurality of downlink resource instances from the output indication representing an ACK or NACK for each of the at least two of the plurality of the subsets of downlink resource instances.

15. An infrastructure equipment (10) for forming part of a wireless communications network, the infrastructure equipment comprising
receiver circuitry (32) configured to receive signals, transmitted via a wireless access interface formed by the infrastructure equipment, from one or more communications devices,
transmitter circuitry (30) configured to transmit signals via the wireless access interface to one or more communications devices, and
controller circuitry (34) configured to control the transmitter circuitry and the receiver circuitry, wherein the controller circuitry is configured
to control the transmitter circuitry to transmit to a communications device (14) control information configuring the communications device to receive downlink data units according to one or more Hybrid Automatic Repeat Request, HARQ, type processes, via a plurality of instances of downlink resources of the wireless access interface, which plurality of instances of downlink resources form a group, and
to transmit a plurality of downlink data units according to the one or more HARQ processes via the group of downlink resource instances, and
to control the receiver circuitry to receive a bundled indication via an uplink resource of the wireless access interface for the group of downlink resource instances, indicating whether one or more of the plurality of downlink data units transmitted via the group of downlink resources instances was received correctly or incorrectly respectively, and
to control the transmitter circuitry to re-transmit one or more of the plurality of downlink data units according to the bundled indication, wherein the bundled indication has been formed by
generating for the group of downlink resource instances a plurality of indications of an acknowledgement, ACK, or negative acknowledgement, NACK, indicating whether each of the plurality of received downlink data units was correctly received or not according to the one or more HARQ processes respectively,
dividing the group of the plurality of downlink resource instances into a plurality of subsets of downlink resource instances each subset comprising a mutually exclusive selection of a plurality of the downlink resource instances from the group, and
forming the bundled indication for the group of the plurality of downlink resource instances by selectively combining the ACK or NACK indications from a plurality of the downlink resource instances of at least one of the plurality of subsets, wherein
the controller circuitry is configured to form of the bundled indication for the group of the plurality of downlink resource instances by
combining the ACK or NACK indications from a plurality of the downlink resource instances of the at least one of the plurality of subsets according to a logical operator to produce as an output the bundled indication representing an ACK or NACK according to the logical combination of the ACK or NACK indications from the plurality of downlink resource indications selected from the subset, or
the controller circuitry is configured to form of the bundled indication for the group of the plurality of downlink resource instances by combining
for each of at least two of the plurality of the subsets of downlink resource instances the ACK or NACK indications from a plurality of the downlink resource instances of the subset according to a logical operator to produce as an output an indication representing an ACK or NACK for the subset according to the logical combination of the ACK or NACK indications from the plurality of downlink resource indications selected from the subset, and
to form the bundled indication for the group of the plurality of downlink resource instances from the output indication representing an ACK or NACK for each of the at least two of the plurality of the subsets of downlink resource instances.

## Patentansprüche

1. Verfahren zum Betreiben einer Kommunikationsvorrichtung (14), umfassend
Konfigurieren einer Empfängerschaltung (48) der Kommunikationsvorrichtung, um Downlink-Dateneinheiten gemäß einem oder mehreren Prozessen eines hybridautomatische-Wiederholungsanforderung-Typs, HARQ-Prozessen, über eine Vielzahl von Instanzen von Downlink-Ressourcen einer drahtlosen Zugangsschnittstelle zu empfangen, die durch ein drahtloses Kommunikationsnetz bereitgestellt wird, wobei die Vielzahl von Instanzen von Downlink-Ressourcen eine Gruppe ausbildet,
Empfangen, durch die Empfängerschaltung, einer Vielzahl von Downlink-Dateneinheiten gemäß dem einen oder den mehreren HARQ-Prozessen, die über die Gruppe von Downlink-Ressourceninstanzen gesendet wird,
Generieren einer Vielzahl von Anzeigen einer Bestätigung, ACK, oder einer negativen Bestätigung, NACK, für die Gruppe von Downlink-Ressourceninstanzen, die anzeigen, ob jede der Vielzahl von empfangenen Downlink-Dateneinheiten gemäß dem einen oder den mehreren HARQ-Prozessen korrekt empfangen wurde oder nicht,
Kombinieren einer Vielzahl von ACK- oder NACK-Anzeigen, die aus den ACK- oder NACK-Anzeigen ausgewählt wird, die für die Vielzahl von Downlink-Ressourceninstanzen der Gruppe generiert werden, um eine gebündelte Anzeige für die Gruppe der Vielzahl von Downlink-Ressourceninstanzen auszubilden, und
Senden der gebündelten Anzeige an das drahtlose Kommunikationsnetz über eine Uplink-Ressource der drahtlosen Zugangsschnittstelle, wobei das Kombinieren der Vielzahl der ACK- oder NACK-Anzeigen, um die gebündelte Anzeige für die Gruppe der Vielzahl von Downlink-Ressourceninstanzen auszubilden, umfasst
Aufteilen der Gruppe der Vielzahl von Downlink-Ressourceninstanzen in eine Vielzahl von Teilmengen von Downlink-Ressourceninstanzen, jeweils umfassend eine sich gegenseitig ausschließende Auswahl einer Vielzahl von Downlink-Ressourceninstanzen aus der Gruppe, und
Ausbilden der gebündelten Anzeige für die Gruppe der Vielzahl von Downlink-Ressourceninstanzen durch wahlweises Kombinieren der ACK- oder NACK-Anzeigen aus einer Vielzahl von Downlink-Ressourceninstanzen von mindestens einer der Vielzahl von Teilmengen, wobei
das Ausbilden der gebündelten Anzeige für die Gruppe der Vielzahl von Downlink-Ressourceninstanzen umfasst
Kombinieren der ACK- oder NACK-Anzeigen aus einer Vielzahl von Downlink-Ressourceninstanzen der mindestens einen der Vielzahl von Teilmengen gemäß einem logischen Operator, um als eine Ausgabe die gebündelte Anzeige zu erzeugen, die eine ACK oder NACK gemäß der logischen Kombination der ACK- oder NACK-Anzeigen aus der Vielzahl von Downlink-Ressourcenanzeigen darstellt, die aus der Teilmenge ausgewählt wird, oder
das Ausbilden der gebündelten Anzeige für die Gruppe der Vielzahl von Downlink-Ressourceninstanzen umfasst
für jede von mindestens zwei der Vielzahl von Teilmengen von Downlink-Ressourceninstanzen, Kombinieren der ACK- oder NACK-Anzeigen aus einer Vielzahl von Downlink-Ressourceninstanzen der Teilmenge gemäß einem logischen Operator, um als eine Ausgabe eine Anzeige zu erzeugen, die eine ACK oder NACK für die Teilmenge gemäß der logischen Kombination der ACK- oder NACK-Anzeigen aus der Vielzahl von Downlink-Ressourcenanzeigen darstellt, die aus der Teilmenge ausgewählt wird, und
Ausbilden der gebündelten Anzeige für die Gruppe der Vielzahl von Downlink-Ressourceninstanzen aus der Ausgabeanzeige, die eine ACK oder NACK für jede der mindestens zwei der Vielzahl der Teilmengen von Downlink-Ressourceninstanzen darstellt.

2. Verfahren nach Anspruch 1, wobei das Ausbilden der gebündelten Anzeige für die Gruppe der Vielzahl von Downlink-Ressourceninstanzen umfasst
Kombinieren der Ausgabeanzeige, die eine ACK oder NACK für jede der mindestens zwei der Vielzahl der Teilmengen von Downlink-Ressourceninstanzen darstellt, gemäß einem logischen Operator.

3. Verfahren nach Anspruch 1, wobei der logische Operator, der verwendet wird, um die ACK- oder NACK-Anzeigen aus einer Vielzahl von Downlink-Ressourceninstanzen für jede der mindestens zwei Teilmengen zu kombinieren, für jede der mindestens zwei Teilmengen ein unterschiedlicher logischer Operator ist.

4. Verfahren nach Anspruch 1, wobei der logische Operator, der verwendet wird, um die ACK- oder NACK-Anzeigen aus einer Vielzahl von Downlink-Ressourceninstanzen für jede der mindestens zwei Teilmengen zu kombinieren, für jede der mindestens zwei Teilmengen der gleiche logische Operator ist.

5. Verfahren nach Anspruch 1, wobei das Generieren, für die Gruppe von Downlink-Ressourceninstanzen, der Vielzahl von Anzeigen einer ACK oder NACK, die anzeigen, ob jede der Vielzahl von empfangenen Downlink-Dateneinheiten korrekt empfangen wurde oder nicht, umfasst
Generieren, für jede der Downlink-Ressourceninstanzen jeder der Teilmengen von Downlink-Ressourceninstanzen der Gruppe, einer ACK oder NACK, die anzeigt, ob eine Downlink-Dateneinheit in der Downlink-Ressourceninstanz der Gruppe korrekt empfangen wurde oder nicht, ob eine Downlink-Dateneinheit in der Downlink-Ressourceninstanz gesendet wurde oder nicht.

6. Verfahren nach Anspruch 1, wobei das Generieren, für die Gruppe von Downlink-Ressourceninstanzen, der Vielzahl von Anzeigen einer ACK oder NACK, die anzeigen, ob jede der Vielzahl von empfangenen Downlink-Dateneinheiten korrekt empfangen wurde oder nicht, umfasst
Bestimmen für jede der Downlink-Ressourceninstanzen jeder der Teilmengen von Downlink-Ressourceninstanzen der Gruppe, ob eine der Vielzahl von Downlink-Dateneinheiten in dieser Downlink-Ressourceninstanz empfangen wurde, und
Generieren, für jede der Downlink-Ressourceninstanzen,, in der eine der Vielzahl von Downlink-Dateneinheiten bestimmt wird, in dieser Downlink-Ressourceninstanz empfangen worden zu sein, einer ACK oder NACK, die anzeigt, ob eine Downlink-Dateneinheit in der Downlink-Ressourceninstanz der Gruppe korrekt empfangen wurde oder nicht, wobei eine ACK oder NACK nur für eine Downlink-Ressourceninstanz generiert wird, in der eine Downlink-Dateneinheit gesendet wurde.

7. Verfahren nach Anspruch 6, wobei das Aufteilen der Gruppe der Vielzahl von Downlink-Ressourceninstanzen in eine Vielzahl von Teilmengen von Downlink-Ressourceninstanzen, jeweils umfassend eine sich gegenseitig ausschließende Auswahl einer Vielzahl der Downlink-Ressourceninstanzen aus der Gruppe, umfasst
Aufteilen der Gruppe der Vielzahl von Downlink-Ressourceninstanzen in zwei Teilmengen von Downlink-Ressourceninstanzen, basierend darauf, ob bestimmt wurde, dass eine der Vielzahl von Downlink-Dateneinheiten in der Downlink-Ressourceninstanz gesendet wurde, die zwei Teilmengen der Downlink-Ressourceneinheiten umfassend eine Teilmenge von Downlink-Ressourceneinheiten, in der eine der Downlink-Dateneinheiten gesendet wurde, und eine Teilmenge von Downlink-Ressourceneinheiten, in der keine Downlink-Dateneinheiten gesendet wurden.

8. Verfahren nach Anspruch 7, wobei das Ausbilden der gebündelten Anzeige für die Gruppe der Vielzahl von Downlink-Ressourceninstanzen durch selektives Kombinieren der ACK- oder NACK-Anzeigen aus einer Vielzahl von Downlink-Ressourceninstanzen umfasst
Kombinieren der ACK- oder NACK-Anzeige für jede der Downlink-Ressourceninstanzen für die Teilmenge der Downlink-Ressourceninstanz, in der die Downlink-Dateneinheiten gesendet wurden, unter Verwendung eines logischen AND-Operators.

9. Verfahren nach Anspruch 1, wobei die eine oder die mehreren der empfangenen Vielzahl von Dateneinheiten in einer oder mehreren Downlink-Ressourceninstanzen der Gruppe erneute Sendungen von einer früheren Gruppe von Downlink-Ressourceninstanzen sind, und das Aufteilen der Gruppe der Vielzahl von Downlink-Ressourceninstanzen in eine Vielzahl von Teilmengen von Downlink-Ressourceninstanzen umfasst
Aufteilen der Gruppe der Vielzahl von Downlink-Ressourceninstanzen in die Vielzahl von Teilmengen von Downlink-Ressourceninstanzen, basierend darauf, ob die Teilmenge eine erneute Sendung von Downlink-Dateneinheiten aus der früheren Gruppe einschließt.

10. Verfahren nach Anspruch 1, wobei die eine oder die mehreren der empfangenen Vielzahl von Dateneinheiten in einer oder mehreren Downlink-Ressourceninstanzen der Gruppe wiederholt gesendet wurden, und das Aufteilen der Gruppe der Downlink-Ressourceninstanzen in eine Vielzahl von Teilmengen von Downlink-Ressourceninstanzen umfasst
Aufteilen der Gruppe der Vielzahl von Downlink-Ressourceninstanzen in die Vielzahl von Teilmengen von Downlink-Ressourceninstanzen basierend auf der wiederholten Sendung der gleichen Downlink-Dateneinheit, wobei die Teilmengen eine Vielzahl von Downlink-Ressourceninstanzen einschließen, in denen die gleiche Downlink-Dateneinheit wiederholt wird, oder die Teilmengen eine Vielzahl von Downlink-Ressourceninstanzen einschließen, in denen die Downlink-Dateneinheiten unterschiedlich sind und zwischen den Teilmengen wiederholt werden.

11. Verfahren nach Anspruch 1, wobei das Konfigurieren der Empfängerschaltung der Kommunikationsvorrichtung, um die Downlink-Dateneinheiten über die Vielzahl von Instanzen der Downlink-Ressourcen der Gruppe zu empfangen, umfasst
Empfangen einer Anzeige der Konfiguration für die Gruppe der Vielzahl von Downlink-Ressourceninstanzen der drahtlosen Zugangsschnittstelle von dem drahtlosen Kommunikationsnetz.

12. Verfahren nach Anspruch 11, wobei die Anzeige der Konfiguration der Gruppe der Vielzahl von Downlink-Ressourceninstanzen unter Verwendung einer Funkressourcenkonfigurationssignalisierung, RRC-Signalisierung, empfangen wird.

13. Kommunikationsvorrichtung (14) für einen Betrieb mit einem drahtlosen Kommunikationsnetz, die Kommunikationsvorrichtung umfassend
eine Empfängerschaltung (48), die konfiguriert ist, um Signale zu empfangen, die über eine drahtlose Zugangsschnittstelle gesendet werden, die durch das drahtlose Kommunikationsnetz bereitgestellt wird,
eine Senderschaltung (49), die konfiguriert ist, um Signale über die drahtlose Zugangsschnittstelle zu senden, und
eine Controller-Schaltung (44), die konfiguriert ist, um die Senderschaltung und die Empfängerschaltung zu steuern, wobei die Controller-Schaltung konfiguriert ist
um die Empfängerschaltung zu konfigurieren, um Downlink-Dateneinheiten gemäß einem oder mehreren Prozessen eines hybridautomatische-Wiederholungsanforderung-Typs, HARQ-Prozessen, über eine Vielzahl von Instanzen von Downlink-Ressourcen einer drahtlosen Zugangsschnittstelle zu empfangen, die durch das drahtlose Kommunikationsnetz bereitgestellt wird, wobei die Vielzahl von Instanzen von Downlink-Ressourcen eine Gruppe ausbildet,
um die Empfängerschaltung zu steuern, um eine Vielzahl von Downlink-Dateneinheiten gemäß dem einen oder den mehreren HARQ-Prozessen zu empfangen, die über die Gruppe von Downlink-Ressourceninstanzen gesendet wird,
um eine Vielzahl von Anzeigen einer Bestätigung, ACK, oder einer negativen Bestätigung, NACK, für die Gruppe von Downlink-Ressourceninstanzen zu generieren, die anzeigen, ob jede der Vielzahl von empfangenen Downlink-Dateneinheiten gemäß dem einen oder den mehreren HARQ-Prozessen korrekt empfangen wurde oder nicht,
um eine Vielzahl der ACK- oder NACK-Anzeigen, die aus den ACK- oder NACK-Anzeigen ausgewählt wird, die für die Vielzahl von Downlink-Ressourceninstanzen der Gruppe generiert werden, zu kombinieren, um eine gebündelte Anzeige für die Gruppe der Vielzahl von Downlink-Ressourceninstanzen auszubilden, und
um die Senderschaltung zu steuern, um die gebündelte Anzeige über eine Uplink-Ressource der drahtlosen Zugangsschnittstelle an das drahtlose Kommunikationsnetz zu senden, wobei die Controller-Schaltung in Kombination mit der Empfängerschaltung konfiguriert ist
um die Gruppe der Vielzahl von Downlink-Ressourceninstanzen in eine Vielzahl von Teilmengen von Downlink-Ressourceninstanzen aufzuteilen, jeweils umfassend eine sich gegenseitig ausschließende Auswahl einer Vielzahl von Downlink-Ressourceninstanzen aus der Gruppe, und
um die gebündelte Anzeige für die Gruppe der Vielzahl von Downlink-Ressourceninstanzen basierend auf dem wahlweisen Kombinieren der ACK- oder NACK-Anzeigen aus einer Vielzahl von Downlink-Ressourceninstanzen von mindestens einer der Vielzahl von Teilmengen auszubilden, wobei
die Controller-Schaltung konfiguriert ist, um die gebündelte Anzeige für die Gruppe der Vielzahl von Downlink-Ressourceninstanzen auszubilden durch
Kombinieren der ACK- oder NACK-Anzeigen aus einer Vielzahl von Downlink-Ressourceninstanzen der mindestens einen der Vielzahl von Teilmengen gemäß einem logischen Operator, um als eine Ausgabe die gebündelte Anzeige zu erzeugen, die eine ACK oder NACK gemäß der logischen Kombination der ACK- oder NACK-Anzeigen aus der Vielzahl von Downlink-Ressourcenanzeigen darstellt, die aus der Teilmenge ausgewählt wird, oder
die Controller-Schaltung konfiguriert ist, um die gebündelte Anzeige für die Gruppe der Vielzahl von Downlink-Ressourceninstanzen auszubilden durch Kombinieren,
für jede von mindestens zwei der Vielzahl der Teilmengen von Downlink-Ressourceninstanzen, die ACK- oder NACK-Anzeigen aus einer Vielzahl der Downlink-Ressourceninstanzen der Teilmenge gemäß einem logischen Operator, um als eine Ausgabe eine Anzeige zu erzeugen, die eine ACK oder NACK für die Teilmenge gemäß der logischen Kombination der ACK- oder NACK-Anzeigen aus der Vielzahl von Downlink-Ressourcenanzeigen darstellt, die aus der Teilmenge ausgewählt wird, und
um die gebündelte Anzeige für die Gruppe der Vielzahl von Downlink-Ressourceninstanzen aus der Ausgabeanzeige auszubilden, die eine ACK oder NACK für jede der mindestens zwei der Vielzahl der Teilmengen von Downlink-Ressourceninstanzen darstellt.

14. Verfahren zum Betreiben einer Infrastrukturausrüstung (10), die Teil eines drahtlosen Kommunikationsnetzes ausbildet, das Verfahren umfassend
Senden von Steuerinformationen an eine Kommunikationsvorrichtung (14) zum Konfigurieren der Kommunikationsvorrichtung, um Downlink-Dateneinheiten gemäß einem oder mehreren Prozessen eines hybridautomatische-Wiederholungsanforderung-Typs, HARQ-Prozessen, über eine Vielzahl von Instanzen von Downlink-Ressourcen einer drahtlosen Zugangsschnittstelle zu empfangen, die durch das drahtlose Kommunikationsnetz bereitgestellt wird, wobei die Vielzahl von Instanzen von Downlink-Ressourcen eine Gruppe ausbildet,
Senden einer Vielzahl von Downlink-Dateneinheiten gemäß dem einen oder den mehreren HARQ-Prozessen, die über die Gruppe von Downlink-Ressourceninstanzen gesendet wird,
Empfangen einer gebündelten Anzeige über eine Uplink-Ressource der drahtlosen Zugangsschnittstelle für die Gruppe von Downlink-Ressourceninstanzen, die anzeigt, ob eine oder mehrere der Vielzahl von Downlink-Dateneinheiten, die über die Gruppe von Downlink-Ressourceninstanzen gesendet wird, jeweils korrekt oder inkorrekt empfangen wurden, und
erneutes Senden einer oder mehrerer der Vielzahl von Downlink-Dateneinheiten gemäß der gebündelten Anzeige, wobei die gebündelte Anzeige ausgebildet wird durch
Generieren einer Vielzahl von Anzeigen einer Bestätigung, ACK, oder einer negativen Bestätigung, NACK, für die Gruppe von Downlink-Ressourceninstanzen, die anzeigen, ob jede der Vielzahl von empfangenen Downlink-Dateneinheiten gemäß dem einen oder den mehreren HARQ-Prozessen korrekt empfangen wurde oder nicht,
Aufteilen der Gruppe der Vielzahl von Downlink-Ressourceninstanzen in eine Vielzahl von Teilmengen von Downlink-Ressourceninstanzen, jeweils umfassend eine sich gegenseitig ausschließende Auswahl einer Vielzahl von Downlink-Ressourceninstanzen aus der Gruppe, und
Ausbilden der gebündelten Anzeige für die Gruppe der Vielzahl von Downlink-Ressourceninstanzen durch wahlweises Kombinieren der ACK- oder NACK-Anzeigen aus einer Vielzahl von Downlink-Ressourceninstanzen von mindestens einer der Vielzahl von Teilmengen, wobei
das Ausbilden der gebündelten Anzeige für die Gruppe der Vielzahl von Downlink-Ressourceninstanzen umfasst
Kombinieren der ACK- oder NACK-Anzeigen aus einer Vielzahl von Downlink-Ressourceninstanzen der mindestens einen der Vielzahl von Teilmengen gemäß einem logischen Operator, um als eine Ausgabe die gebündelte Anzeige zu erzeugen, die eine ACK oder NACK gemäß der logischen Kombination der ACK- oder NACK-Anzeigen aus der Vielzahl von Downlink-Ressourcenanzeigen darstellt, die aus der Teilmenge ausgewählt wird, oder
das Ausbilden der gebündelten Anzeige für die Gruppe der Vielzahl von Downlink-Ressourceninstanzen umfasst
für jede von mindestens zwei der Vielzahl von Teilmengen von Downlink-Ressourceninstanzen, Kombinieren der ACK- oder NACK-Anzeigen aus einer Vielzahl von Downlink-Ressourceninstanzen der Teilmenge gemäß einem logischen Operator, um als eine Ausgabe eine Anzeige zu erzeugen, die eine ACK oder NACK für die Teilmenge gemäß der logischen Kombination der ACK- oder NACK-Anzeigen aus der Vielzahl von Downlink-Ressourcenanzeigen darstellt, die aus der Teilmenge ausgewählt wird, und
Ausbilden der gebündelten Anzeige für die Gruppe der Vielzahl von Downlink-Ressourceninstanzen aus der Ausgabeanzeige, die eine ACK oder NACK für jede der mindestens zwei der Vielzahl der Teilmengen von Downlink-Ressourceninstanzen darstellt.

15. Infrastrukturausrüstung (10) zum Ausbilden eines Teils eines drahtlosen Kommunikationsnetzes, die Infrastrukturausrüstung umfassend
die Empfängerschaltung (32), die konfiguriert ist, um Signale zu empfangen, die über eine drahtlose Zugangsschnittstelle, die durch die Infrastrukturausrüstung ausgebildet wird, von einem oder mehreren Kommunikationsvorrichtungen gesendet werden,
die Senderschaltung (30), die konfiguriert ist, um Signale über die drahtlose Zugangsschnittstelle an ein oder mehrere Kommunikationsvorrichtungen zu senden, und
die Controller-Schaltung (34), die konfiguriert ist, um die Senderschaltung und die Empfängerschaltung zu steuern, wobei die Controller-Schaltung konfiguriert ist
um die Senderschaltung zu steuern, um Steuerinformationen an eine Kommunikationsvorrichtung (14) zu senden, die die Kommunikationsvorrichtung konfigurieren, um Downlink-Dateneinheiten gemäß einem oder mehreren Prozessen eines hybridautomatische-Wiederholungsanforderung-Typs, HARQ-Prozessen, über eine Vielzahl von Instanzen von Downlink-Ressourcen der drahtlosen Zugangsschnittstelle zu empfangen, wobei die Vielzahl von Instanzen von Downlink-Ressourcen eine Gruppe ausbildet, und
um eine Vielzahl von Downlink-Dateneinheiten gemäß dem einen oder den mehreren HARQ-Prozessen über die Gruppe von Downlink-Ressourceninstanzen zu senden, und
um die Empfängerschaltung zu steuern, um über eine Uplink-Ressource der drahtlosen Zugangsschnittstelle eine gebündelte Anzeige für die Gruppe von Downlink-Ressourceninstanzen zu empfangen, die anzeigt, ob eine oder mehrere der Vielzahl von Downlink-Dateneinheiten, die über die Gruppe von Downlink-Ressourceninstanzen gesendet wird, jeweils korrekt oder inkorrekt empfangen wurden, und
um die Senderschaltung zu steuern, um eine oder mehrere der Vielzahl von Downlink-Dateneinheiten gemäß der gebündelten Anzeige erneut zu senden, wobei die gebündelte Anzeige ausgebildet wurde durch
Generieren einer Vielzahl von Anzeigen einer Bestätigung, ACK, oder einer negativen Bestätigung, NACK, für die Gruppe von Downlink-Ressourceninstanzen, die anzeigen, ob jede der Vielzahl von empfangenen Downlink-Dateneinheiten gemäß dem einen oder den mehreren HARQ-Prozessen korrekt empfangen wurde oder nicht,
Aufteilen der Gruppe der Vielzahl von Downlink-Ressourceninstanzen in eine Vielzahl Teilmengen von Downlink-Ressourceninstanzen, jede Teilmenge umfassend eine sich gegenseitig ausschließende Auswahl einer Vielzahl der Downlink-Ressourceninstanzen aus der Gruppe, und
Ausbilden der gebündelten Anzeige für die Gruppe der Vielzahl von Downlink-Ressourceninstanzen durch wahlweises Kombinieren der ACK- oder NACK-Anzeigen aus einer Vielzahl von Downlink-Ressourceninstanzen von mindestens einer der Vielzahl von Teilmengen, wobei
die Controller-Schaltung konfiguriert ist, um die gebündelte Anzeige für die Gruppe der Vielzahl von Downlink-Ressourceninstanzen auszubilden durch
Kombinieren der ACK- oder NACK-Anzeigen aus einer Vielzahl von Downlink-Ressourceninstanzen der mindestens einen der Vielzahl von Teilmengen gemäß einem logischen Operator, um als eine Ausgabe die gebündelte Anzeige zu erzeugen, die eine ACK oder NACK gemäß der logischen Kombination der ACK- oder NACK-Anzeigen aus der Vielzahl von Downlink-Ressourcenanzeigen darstellt, die aus der Teilmenge ausgewählt wird, oder
die Controller-Schaltung konfiguriert ist, um die gebündelte Anzeige für die Gruppe der Vielzahl von Downlink-Ressourceninstanzen auszubilden durch Kombinieren,
für jede von mindestens zwei der Vielzahl der Teilmengen von Downlink-Ressourceninstanzen, die ACK- oder NACK-Anzeigen aus einer Vielzahl der Downlink-Ressourceninstanzen der Teilmenge gemäß einem logischen Operator, um als eine Ausgabe eine Anzeige zu erzeugen, die eine ACK oder NACK für die Teilmenge gemäß der logischen Kombination der ACK- oder NACK-Anzeigen aus der Vielzahl von Downlink-Ressourcenanzeigen darstellt, die aus der Teilmenge ausgewählt wird, und
um die gebündelte Anzeige für die Gruppe der Vielzahl von Downlink-Ressourceninstanzen aus der Ausgabeanzeige auszubilden, die eine ACK oder NACK für jede der mindestens zwei der Vielzahl der Teilmengen von Downlink-Ressourceninstanzen darstellt.

## Revendications

1. Procédé permettant de faire fonctionner un dispositif de communication (14) comprenant
la configuration de circuits de réception (48) du dispositif de communication pour recevoir des unités de données de liaison descendante selon un ou plusieurs processus de type requête de répétition automatique hybride, HARQ, par l'intermédiaire d'une pluralité d'instances de ressources de liaison descendante d'une interface d'accès sans fil fournie par un réseau de communication sans fil, ladite pluralité d'instances de ressources de liaison descendante forme un groupe,
la réception, par les circuits de réception, d'une pluralité d'unités de données de liaison descendante selon le ou les processus HARQ transmis par l'intermédiaire du groupe d'instances de ressources de liaison descendante,
la génération, pour le groupe d'instances de ressources de liaison descendante, d'une pluralité d'indications d'un accusé de réception, ACK, ou d'un accusé de réception négatif, NACK, indiquant si chacune parmi la pluralité d'unités de données de liaison descendante reçues a été correctement reçue ou non selon le ou les processus HARQ,
la combinaison d'une pluralité d'indications ACK ou NACK sélectionnées parmi les indications ACK ou NACK générées pour la pluralité d'instances de ressources de liaison descendante du groupe pour former une indication groupée pour le groupe de la pluralité d'instances de ressources de liaison descendante, et
la transmission de l'indication groupée au réseau de communication sans fil par l'intermédiaire d'une ressource de liaison montante de l'interface d'accès sans fil, dans lequel la combinaison de la pluralité d'indications ACK ou NACK pour former l'indication groupée pour le groupe de la pluralité d'instances de ressources de liaison descendante comprend
la division du groupe de la pluralité d'instances de ressources de liaison descendante en une pluralité de sous-ensembles d'instances de ressources de liaison descendante comprenant chacun une sélection mutuellement exclusive d'une pluralité d'instances de ressources de liaison descendante provenant du groupe, et
la formation de l'indication groupée pour le groupe de la pluralité d'instances de ressources de liaison descendante en combinant sélectivement les indications ACK ou NACK provenant d'une pluralité d'instances de ressources de liaison descendante d'au moins un sous-ensemble de la pluralité de sous-ensembles, dans lequel
la formation de l'indication groupée pour le groupe de la pluralité d'instances de ressources de liaison descendante comprend
la combinaison des indications ACK ou NACK provenant d'une pluralité d'instances de ressources de liaison descendante de l'au moins un sous-ensemble de la pluralité de sous-ensembles selon un opérateur logique pour produire en tant que sortie l'indication groupée représentant un ACK ou un NACK selon la combinaison logique des indications ACK ou NACK provenant de la pluralité d'indications de ressources de liaison descendante sélectionnées dans le sous-ensemble, ou
la formation de l'indication groupée pour le groupe de la pluralité d'instances de ressources de liaison descendante comprend
pour chacun parmi au moins deux sous-ensembles de la pluralité de sous-ensembles d'instances de ressources de liaison descendante, la combinaison des indications ACK ou NACK provenant d'une pluralité d'instances de ressources de liaison descendante du sous-ensemble selon un opérateur logique pour produire en tant que sortie une indication représentant un ACK ou un NACK pour le sous-ensemble selon la combinaison logique des indications ACK ou NACK provenant de la pluralité d'indications de ressources de liaison descendante sélectionnées dans le sous-ensemble, et
la formation de l'indication groupée pour le groupe de la pluralité d'instances de ressources de liaison descendante à partir de l'indication sortie représentant un ACK ou un NACK pour chacun parmi les au moins deux sous-ensembles de la pluralité de sous-ensembles d'instances de ressources de liaison descendante.

2. Procédé selon la revendication 1, dans lequel la formation de l'indication groupée pour le groupe de la pluralité d'instances de ressources de liaison descendante comprend
la combinaison de l'indication sortie représentant un ACK ou un NACK pour chacun parmi les au moins deux sous-ensembles de la pluralité de sous-ensembles d'instances de ressources de liaison descendante selon un opérateur logique.

3. Procédé selon la revendication 1, dans lequel l'opérateur logique qui est utilisé pour combiner les indications ACK ou NACK provenant d'une pluralité d'instances de ressources de liaison descendante pour chacun parmi les au moins deux sous-ensembles est un opérateur logique différent pour chacun parmi les au moins deux sous-ensembles.

4. Procédé selon la revendication 1, dans lequel l'opérateur logique qui est utilisé pour combiner les indications ACK ou NACK provenant d'une pluralité d'instances de ressources de liaison descendante pour chacun parmi les au moins deux sous-ensembles est le même opérateur logique pour chacun parmi les au moins deux sous-ensembles.

5. Procédé selon la revendication 1, dans lequel la génération, pour le groupe d'instances de ressources de liaison descendante, de la pluralité d'indications d'un ACK, ou d'un NACK, indiquant si chacune parmi la pluralité d'unités de données de liaison descendante reçues a été correctement reçue ou non comprend
la génération, pour chacune des instances de ressources de liaison descendante de chacun parmi les sous-ensembles d'instances de ressources de liaison descendante du groupe, d'un ACK ou d'un NACK indiquant si une unité de données de liaison descendante a été reçue correctement ou non dans l'instance de ressources de liaison descendante du groupe si une unité de données de liaison descendante a été transmise ou non dans l'instance de ressources de liaison descendante.

6. Procédé selon la revendication 1, dans lequel la génération, pour le groupe d'instances de ressources de liaison descendante, de la pluralité d'indications d'un ACK, ou d'un NACK, indiquant si chacune parmi la pluralité d'unités de données de liaison descendante reçues a été correctement reçue ou non comprend
le fait de déterminer, pour chacune des instances de ressources de liaison descendante de chacun des sous-ensembles d'instances de ressources de liaison descendante du groupe, si une unité de données de liaison descendante de la pluralité d'unités de données de liaison descendante a été reçue dans ladite instance de ressources de liaison descendante ou non, et
la génération, pour chacune des instances de ressources de liaison descendante dans lesquelles il est déterminé qu'une unité de données de liaison descendante de la pluralité d'unités de données de liaison descendante a été reçue dans ladite instance de ressources de liaison descendante, d'un ACK ou d'un NACK indiquant si une unité de données de liaison descendante a été reçue correctement dans l'instance de ressources de liaison descendante du groupe ou non, un ACK ou un NACK n'étant généré que pour une instance de ressources de liaison descendante dans laquelle une unité de données de liaison descendante a été transmise.

7. Procédé selon la revendication 6, dans lequel la division du groupe de la pluralité d'instances de ressources de liaison descendante en une pluralité de sous-ensembles d'instances de ressources de liaison descendante comprenant chacun une sélection mutuellement exclusive d'une pluralité de la pluralité d'instances de ressources de liaison descendante provenant du groupe comprend
la division du groupe de la pluralité d'instances de ressources de liaison descendante en deux sous-ensembles d'instances de ressources de liaison descendante selon qu'il a été déterminé ou non qu'une unité de données de liaison descendante de la pluralité d'unités de données de liaison descendante a été transmise dans l'instance de ressources de liaison descendante, les deux sous-ensembles d'unités de ressources de liaison descendante comprenant un sous-ensemble d'unités de ressources de liaison descendante dans lesquelles l'une des unités de données de liaison descendante a été transmise et un sous-ensemble d'unités de ressources de liaison descendante dans lesquelles aucune unité de données de liaison descendante n'a été transmise.

8. Procédé selon la revendication 7, dans lequel la formation de l'indication groupée pour le groupe de la pluralité d'instances de ressources de liaison descendante en combinant sélectivement les indications ACK ou NACK provenant d'une pluralité d'instances de ressources de liaison descendante comprend
la combinaison de l'indication ACK ou NACK pour chacune des instances de ressources de liaison descendante pour le sous-ensemble d'instances de ressources de liaison descendante dans lequel les unités de données de liaison descendante ont été transmises à l'aide d'un opérateur ET logique.

9. Procédé selon la revendication 1, dans lequel la ou les unités de données de la pluralité d'unités de données reçues dans une ou plusieurs des instances de ressources de liaison descendante du groupe sont des retransmissions provenant d'un groupe antérieur d'instances de ressources de liaison descendante, et la division du groupe de la pluralité d'instances de ressources de liaison descendante en une pluralité de sous-ensembles d'instances de ressources de liaison descendante comprend
la division du groupe de la pluralité d'instances de ressources de liaison descendante en la pluralité de sous-ensembles d'instances de ressources de liaison descendante selon que le sous-ensemble comporte ou non la retransmission d'unités de données de liaison descendante provenant du groupe antérieur.

10. Procédé selon la revendication 1, dans lequel la ou les unités de données de la pluralité d'unités de données reçues ont été transmises de manière répétée dans une ou plusieurs des instances de ressources de liaison descendante du groupe, et la division du groupe de la pluralité d'instances de ressources de liaison descendante en une pluralité de sous-ensembles d'instances de ressources de liaison descendante comprend
la division du groupe de la pluralité d'instances de ressources de liaison descendante en la pluralité de sous-ensembles d'instances de ressources de liaison descendante en fonction de la transmission répétée de la même unité de données de liaison descendante, les sous-ensembles comportant une pluralité d'instances de ressources de liaison descendante dans lesquelles la même unité de données de liaison descendante est répétée ou les sous-ensembles comportant une pluralité d'instances de ressources de liaison descendante dans lesquelles les unités de données de liaison descendante sont différentes et répétées entre les sous-ensembles.

11. Procédé selon la revendication 1, dans lequel la configuration des circuits de réception du dispositif de communication pour recevoir les unités de données de liaison descendante par l'intermédiaire de la pluralité d'instances de ressources de liaison descendante du groupe comprend
la réception, en provenance du réseau de communication sans fil, d'une indication de la configuration pour le groupe de la pluralité d'instances de ressources de liaison descendante de l'interface d'accès sans fil.

12. Procédé selon la revendication 11, dans lequel l'indication de la configuration du groupe de la pluralité d'instances de ressources de liaison descendante est reçue à l'aide d'une signalisation de configuration de ressources radio, RRC.

13. Dispositif de communication (14) destiné à fonctionner avec un réseau de communication sans fil, le dispositif de communication comprenant
des circuits de réception (48) configurés pour recevoir des signaux transmis par l'intermédiaire d'une interface d'accès sans fil fournie par le réseau de communication sans fil,
des circuits de transmission (49) configurés pour transmettre des signaux par l'intermédiaire de l'interface d'accès sans fil, et
des circuits de commande (44) configurés pour commander les circuits de transmission et les circuits de réception, dans lequel les circuits de commande sont configurés pour
configurer les circuits de réception pour recevoir des unités de données de liaison descendante selon un ou plusieurs processus de type requête de répétition automatique hybride, HARQ, par l'intermédiaire d'une pluralité d'instances de ressources de liaison descendante d'une interface d'accès sans fil fournie par le réseau de communication sans fil, ladite pluralité d'instances de ressources de liaison descendante forme un groupe,
commander les circuits de réception pour recevoir une pluralité d'unités de données de liaison descendante selon le ou les processus HARQ transmis par l'intermédiaire du groupe d'instances de ressources de liaison descendante,
générer, pour le groupe d'instances de ressources de liaison descendante, une pluralité d'indications d'un accusé de réception, ACK, ou d'un accusé de réception négatif, NACK, indiquant si chacune parmi la pluralité d'unités de données de liaison descendante reçues a été correctement reçue ou non selon le ou les processus HARQ,
combiner une pluralité d'indications ACK ou NACK sélectionnées parmi les indications ACK ou NACK générées pour la pluralité d'instances de ressources de liaison descendante du groupe afin de former une indication groupée pour le groupe de la pluralité d'instances de ressources de liaison descendante, et
commander les circuits de transmission pour transmettre l'indication groupée au réseau de communication sans fil par l'intermédiaire d'une ressource de liaison montante de l'interface d'accès sans fil, dans lequel les circuits de commande sont configurés en combinaison avec les circuits de réception
diviser le groupe de la pluralité d'instances de ressources de liaison descendante en une pluralité de sous-ensembles d'instances de ressources de liaison descendante comprenant chacun une sélection mutuellement exclusive d'une pluralité d'instances de ressources de liaison descendante provenant du groupe, et
former l'indication groupée pour le groupe de la pluralité d'instances de ressources de liaison descendante en fonction de la combinaison de manière sélective des indications ACK ou NACK provenant d'une pluralité d'instances de ressources de liaison descendante d'au moins un sous-ensemble de la pluralité de sous-ensembles, dans lequel
les circuits de commande sont configurés pour former l'indication groupée pour le groupe de la pluralité d'instances de ressources de liaison descendante en
combinant les indications ACK ou NACK provenant d'une pluralité d'instances de ressources de liaison descendante de l'au moins un sous-ensemble de la pluralité de sous-ensembles selon un opérateur logique pour produire en tant que sortie l'indication groupée représentant un ACK ou un NACK selon la combinaison logique des indications ACK ou NACK provenant de la pluralité d'indications de ressources de liaison descendante sélectionnées dans le sous-ensemble, ou
les circuits de commande sont configurés pour former l'indication groupée pour le groupe de la pluralité d'instances de ressources de liaison descendante en combinant
pour chacun parmi au moins deux sous-ensembles de la pluralité de sous-ensembles d'instances de ressources de liaison descendante, les indications ACK ou NACK provenant d'une pluralité d'instances de ressources de liaison descendante du sous-ensemble selon un opérateur logique afin de produire en tant que sortie une indication représentant un ACK ou un NACK pour le sous-ensemble selon la combinaison logique des indications ACK ou NACK provenant de la pluralité d'indications de ressources de liaison descendante sélectionnées dans le sous-ensemble, et
former l'indication groupée pour le groupe de la pluralité d'instances de ressources de liaison descendante à partir de l'indication sortie représentant un ACK ou un NACK pour chacun parmi les au moins deux sous-ensembles de la pluralité de sous-ensembles d'instances de ressources de liaison descendante.

14. Procédé permettant de faire fonctionner un équipement d'infrastructure (10) formant une partie d'un réseau de communication sans fil, le procédé comprenant
la transmission à un dispositif de communication (14) d'informations de commande pour la configuration du dispositif de communication pour recevoir des unités de données de liaison descendante selon un ou plusieurs processus de type requête de répétition automatique hybride, HARQ, par l'intermédiaire d'une pluralité d'instances de ressources de liaison descendante d'une interface d'accès sans fil fournie par le réseau de communication sans fil, ladite pluralité d'instances de ressources de liaison descendante forme un groupe,
la transmission d'une pluralité d'unités de données de liaison descendante selon le ou les processus HARQ transmis par l'intermédiaire du groupe d'instances de ressources de liaison descendante,
la réception d'une indication groupée par l'intermédiaire d'une ressource de liaison montante de l'interface d'accès sans fil pour le groupe d'instances de ressources de liaison descendante, indiquant si une ou plusieurs unités de données de liaison descendante parmi la pluralité d'unités de données de liaison descendante transmises par l'intermédiaire du groupe d'instances de ressources de liaison descendante ont été reçues correctement ou incorrectement, respectivement, et
la retransmission d'une ou de plusieurs unités de données de liaison descendante parmi la pluralité d'unités de données de liaison descendante selon l'indication groupée, dans lequel l'indication groupée est formée par
la génération, pour le groupe d'instances de ressources de liaison descendante, d'une pluralité d'indications d'un accusé de réception, ACK, ou d'un accusé de réception négatif, NACK, indiquant si chacune parmi la pluralité d'unités de données de liaison descendante reçues a été correctement reçue ou non, respectivement, selon le ou les processus HARQ,
la division du groupe de la pluralité d'instances de ressources de liaison descendante en une pluralité de sous-ensembles d'instances de ressources de liaison descendante comprenant chacun une sélection mutuellement exclusive d'une pluralité d'instances de ressources de liaison descendante provenant du groupe, et
la formation de l'indication groupée pour le groupe de la pluralité d'instances de ressources de liaison descendante en combinant sélectivement les indications ACK ou NACK provenant d'une pluralité d'instances de ressources de liaison descendante d'au moins un sous-ensemble de la pluralité de sous-ensembles, dans lequel
la formation de l'indication groupée pour le groupe de la pluralité d'instances de ressources de liaison descendante comprend
la combinaison des indications ACK ou NACK provenant d'une pluralité d'instances de ressources de liaison descendante de l'au moins un sous-ensemble de la pluralité de sous-ensembles selon un opérateur logique pour produire en tant que sortie l'indication groupée représentant un ACK ou un NACK selon la combinaison logique des indications ACK ou NACK provenant de la pluralité d'indications de ressources de liaison descendante sélectionnées dans le sous-ensemble, ou
la formation de l'indication groupée pour le groupe de la pluralité d'instances de ressources de liaison descendante comprend
pour chacun parmi au moins deux sous-ensembles de la pluralité de sous-ensembles d'instances de ressources de liaison descendante, la combinaison des indications ACK ou NACK provenant d'une pluralité d'instances de ressources de liaison descendante du sous-ensemble selon un opérateur logique pour produire en tant que sortie une indication représentant un ACK ou un NACK pour le sous-ensemble selon la combinaison logique des indications ACK ou NACK provenant de la pluralité d'indications de ressources de liaison descendante sélectionnées dans le sous-ensemble, et
la formation de l'indication groupée pour le groupe de la pluralité d'instances de ressources de liaison descendante à partir de l'indication sortie représentant un ACK ou un NACK pour chacun parmi les au moins deux sous-ensembles de la pluralité de sous-ensembles d'instances de ressources de liaison descendante.

15. Équipement d'infrastructure (10) pour la formation d'une partie d'un réseau de communication sans fil, l'équipement d'infrastructure comprenant
des circuits de réception (32) configurés pour recevoir des signaux, transmis par l'intermédiaire d'une interface d'accès sans fil formée par l'équipement d'infrastructure, provenant d'un ou de plusieurs dispositifs de communication,
des circuits de transmission (30) configurés pour transmettre des signaux par l'intermédiaire de l'interface d'accès sans fil à un ou plusieurs dispositifs de communication, et
des circuits de commande (34) configurés pour commander les circuits de transmission et les circuits de réception, dans lequel les circuits de commande sont configurés pour
commander les circuits de transmission pour transmettre à un dispositif de communication (14) des informations de commande configurant le dispositif de communication pour recevoir des unités de données de liaison descendante selon un ou plusieurs processus de type requête de répétition automatique hybride, HARQ, par l'intermédiaire d'une pluralité d'instances de ressources de liaison descendante de l'interface d'accès sans fil, ladite pluralité d'instances de ressources de liaison descendante forme un groupe, et
transmettre une pluralité d'unités de données de liaison descendante selon le ou les processus HARQ par l'intermédiaire du groupe d'instances de ressources de liaison descendante, et
commander les circuits de réception pour recevoir une indication groupée par l'intermédiaire d'une ressource de liaison montante de l'interface d'accès sans fil pour le groupe d'instances de ressources de liaison descendante, indiquant si une ou plusieurs unités de données de liaison descendante de la pluralité d'unités de données de liaison descendante transmises par l'intermédiaire du groupe d'instances de ressources de liaison descendante ont été reçues correctement ou incorrectement, respectivement, et
commander les circuits de transmission pour retransmettre une ou plusieurs unités de données de liaison descendante de la pluralité d'unités de données de liaison descendante selon l'indication groupée, dans lequel l'indication groupée a été formée par
la génération, pour le groupe d'instances de ressources de liaison descendante, d'une pluralité d'indications d'un accusé de réception, ACK, ou d'un accusé de réception négatif, NACK, indiquant si chacune parmi la pluralité d'unités de données de liaison descendante reçues a été correctement reçue ou non selon le ou les processus HARQ respectivement,
la division du groupe de la pluralité d'instances de ressources de liaison descendante en une pluralité de sous-ensembles d'instances de ressources de liaison descendante, chaque sous-ensemble comprenant une sélection mutuellement exclusive d'une pluralité d'instances de ressources de liaison descendante provenant du groupe, et
la formation de l'indication groupée pour le groupe de la pluralité d'instances de ressources de liaison descendante en combinant sélectivement les indications ACK ou NACK provenant d'une pluralité d'instances de ressources de liaison descendante d'au moins un sous-ensemble de la pluralité de sous-ensembles, dans lequel
les circuits de commande sont configurés pour former l'indication groupée pour le groupe de la pluralité d'instances de ressources de liaison descendante en
combinant les indications ACK ou NACK provenant d'une pluralité d'instances de ressources de liaison descendante de l'au moins un sous-ensemble de la pluralité de sous-ensembles selon un opérateur logique pour produire en tant que sortie l'indication groupée représentant un ACK ou un NACK selon la combinaison logique des indications ACK ou NACK provenant de la pluralité d'indications de ressources de liaison descendante sélectionnées dans le sous-ensemble, ou
les circuits de commande sont configurés pour former l'indication groupée pour le groupe de la pluralité d'instances de ressources de liaison descendante en combinant
pour chacun parmi au moins deux sous-ensembles de la pluralité de sous-ensembles d'instances de ressources de liaison descendante, les indications ACK ou NACK provenant d'une pluralité d'instances de ressources de liaison descendante du sous-ensemble selon un opérateur logique afin de produire en tant que sortie une indication représentant un ACK ou un NACK pour le sous-ensemble selon la combinaison logique des indications ACK ou NACK provenant de la pluralité d'indications de ressources de liaison descendante sélectionnées dans le sous-ensemble, et
former l'indication groupée pour le groupe de la pluralité d'instances de ressources de liaison descendante à partir de l'indication sortie représentant un ACK ou un NACK pour chacun parmi les au moins deux sous-ensembles de la pluralité de sous-ensembles d'instances de ressources de liaison descendante.
